(19) Europäisches Patentamt / European Patent Office / Office européen des brevets

(11) **EP 3 836 797 B1**

(12) **EUROPEAN PATENT SPECIFICATION**

(45) Date of publication and mention
of the grant of the patent:
**10.01.2024 Bulletin 2024/02**

(21) Application number: **19758459.2**

(22) Date of filing: **13.08.2019**

(51) International Patent Classification (IPC):
*A23K 20/147* (2016.01)    *A23K 20/163* (2016.01)
*A23K 40/25* (2016.01)    *A23K 50/42* (2016.01)

(52) Cooperative Patent Classification (CPC):
**A23K 50/42; A23K 20/147; A23K 20/163;
A23K 40/25**

(86) International application number:
**PCT/GB2019/052276**

(87) International publication number:
**WO 2020/035677 (20.02.2020 Gazette 2020/08)**

(54) **EDIBLE ANIMAL CHEWS**

ESSBARES KAUSPIELZEUG FÜR TIERE

PRODUITS À MÂCHER COMESTIBLES POUR ANIMAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.08.2018   GB 201813413**

(43) Date of publication of application:
**23.06.2021   Bulletin 2021/25**

(60) Divisional application:
**23182380.8 / 4 233 555**

(73) Proprietor: **MARS, INCORPORATED**
**McLean, Virginia 22101 (US)**

(72) Inventor: **GOSLING, Matthew, Peter**
**West Yorkshire WF17 9LU (GB)**

(74) Representative: **Haseltine Lake Kempner LLP
One Portwall Square
Portwall Lane
Bristol BS1 6BH (GB)**

(56) References cited:
**EP-A1- 1 875 811        AU-B2- 2006 236 080
US-A1- 2017 339 981    US-A1- 2018 220 679
US-B1- 6 455 083**

## Description

### Background

Edible animal chews provide oral care and mental stimulation through occupation for domestic animals, particularly dogs. The material properties of current edible animal chews are provided by starch, which is sometimes included in the form of flours. The longest chewing time per gram of synthetic animal chews has been provided by combining the material properties of starch with the use of an aerated structure.

Alternative, longer lasting, animal chews can be formed from animal hide (raw-hide), which requires no, or only minimal, processing. Despite providing longer chewing time, commercial exploitation of these animal-hide-based chews have several major drawbacks. These products have been linked to several cases of damage to teeth, as well as intestinal damage and microbacterial poisoning. Furthermore, the inconsistent size, shape and properties of the rawhide, which are affected by the part of the animal hide being used, the quality of the butchering and subsequent processing, results in an inconstant product not suited to large scale commercialisation.

AU2006236080 B2 relates to an animal chew for dogs, cats and other related animals and more particularly to a molded, completely digestible, nutritious animal chew which is enriched with vitamins, minerals and herb additives to facilitate the delivery of such ingredients to the animal through the chewing process.

EP1875811 A1 relates to a chewable and/or edible product for pets and other animals mainly composed of a fibrous collagenous matrix, formed into any shape or design.

US 6455083 B1 relates to an edible thermoplastic made from about 30 to 50 wt.% protein comprising a mixture of plant and animal derived protein, 20 to 50 wt.% starch, about 10 to 20 wt.% water, about 1 to 10 wt.% edible fiber and about 0.5 to 3 wt.% metallic salt hydrate.

US201733981 A1 relates to an edible pet chew comprising a member of an artificial bully stick formed from a composition material with pizzle ingredient imitating traditional bully stick products.

### Brief Description of the Figures

Figure 1A provides the tensile toughness of various edible animal chews (Powders Samples 1-5), wherein each edible animal chew comprises pork skin protein (PSP). These example edible animal chews are not according to the invention and are disclosed for illustration purposes only.

Figure 1B provides ratio of SME (mechanical energy transferred by the extruder) to rotations per minute (RPM) seen for various edible animal chews (Powders Samples 1-5). These example edible animal chews are not according to the invention and are disclosed for illustration purposes only.

Figure 2 shows triangular contour plots of the expanded hot strength of the edible animal chew of the present disclosure, when the edible animal chew comprises A) 0% and (comparative example) B) 10 wt.% hydrolysed sodium octenyl succinate starch.

Figure 3 shows triangular contour plots of the expanded cross section of the edible animal chew of the present disclosure, when the edible animal chew comprises A) 0% and (comparative example) B) 10 wt.% hydrolysed sodium octenyl succinate starch.

Figure 4 shows triangular contour plots of the tensile strength with A) 0% (comparative example) and B) 10 wt.% hydrolysed sodium octenyl succinate starch.

Figure 5 shows triangular contour plots of the shear resistance of the edible animal chew of the present disclosure, when the edible animal chew comprises A) 0% (comparative example) and B) 10 wt.% hydrolysed sodium octenyl succinate starch.

Figure 6 shows triangular contour plots of the hardness (conical probe) of the edible animal chew of the present disclosure, when the edible animal chew comprises A) 0% (comparative example) and B) 10 wt.% hydrolysed sodium succinate starch.

Figure 7 shows A) daily and B) weekly lasting time data for edible animal chews containing pork skin protein in comparison to currently available daily and weekly products.

Figure 8 shows a comparison of the tensile toughness of edible animal chews formed by using partially hydrolysed collagen with those formed by combining natural collagen extract with gelatine (hydrolysed collagen). These example animal chews are not according to the invention and are disclosed for illustration purposes only.

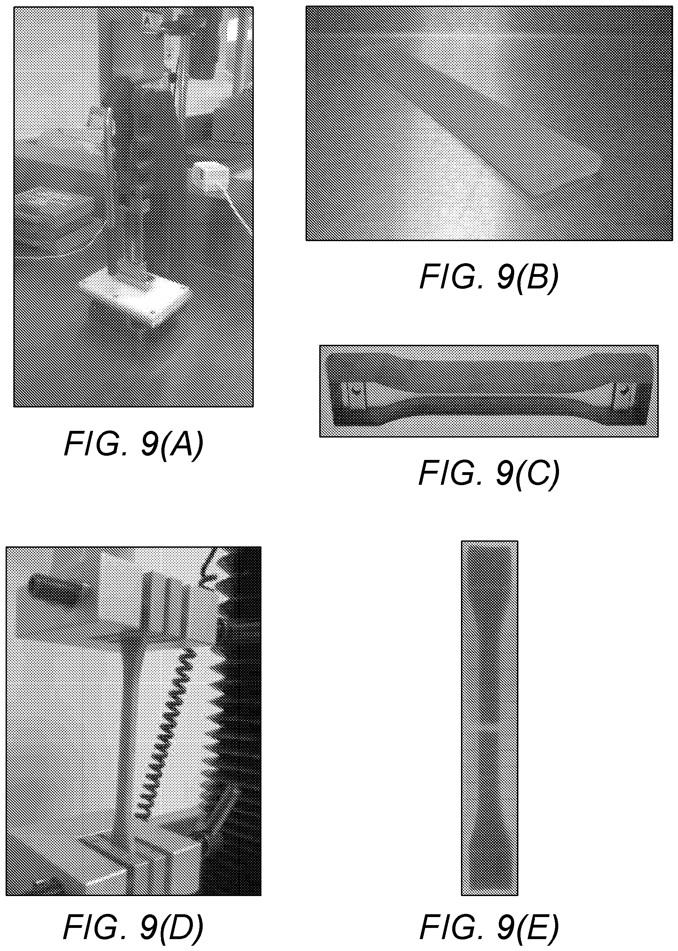

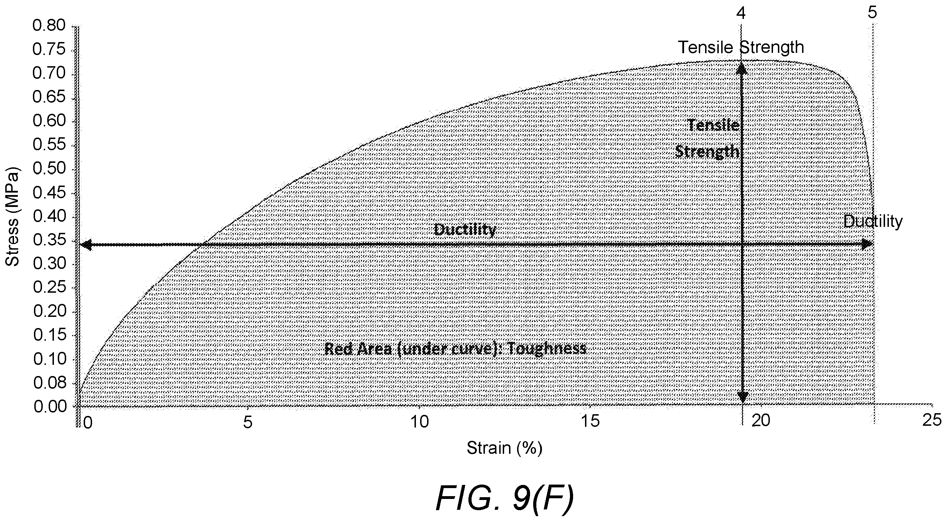

Figure 9 shows the tensile test equipment (which can be used to determine tensile toughness) and samples. A) cutting press; B) ribbon (flat sheet) extrudate; C) a tensile bar cutting stamp [ISO 527-2; 75 mm long, 10 mm wide, 5 mm centre]; D) a tensile bar during texture analysis; and E) a tensile bar after analysis - the tensile bar is positioned within the grips of the tensile testing machine so that its full shoulder is exposed. F) a general plot of the force response curve of a texture analysis test plotted on axes of stress (MPa) versus strain (%). The dimensions of the central break point (width and depth) are accounted for in the plot.

## Detailed Description

The present invention is defined by the appended the claims.

The presently-disclosed subject matter is illustrated by specific but non-limiting examples throughout this description. The examples may include compilations of data that are representative of data gathered at various times during the course of development and experimentation related to the present invention(s). Each example is provided by way of explanation of the present disclosure and is not a limitation thereon.

All references to singular characteristics or limitations of the present disclosure shall include the corresponding plural characteristic(s) or limitation(s) and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs. Although any methods, devices, and materials similar or equivalent to those described herein can be used in the practice or testing of the presently-disclosed subject matter, representative methods, devices, and materials are now described.

Following long-standing patent law convention, the terms "a", "an", and "the" refer to "one or more" when used in this application, including the claims. Thus, for example, reference to "an animal chew" may include a plurality of such animal chews, and so forth.

Unless otherwise indicated, all numbers expressing quantities, properties, and so forth used in the specification and claims are to be understood as being modified in all instances by the term "about". Accordingly, unless indicated to the contrary, the numerical parameters set forth in this specification and claims are approximations that can vary depending upon the desired properties sought to be obtained by the presently-disclosed subject matter.

As used herein, the term "about," when referring to a value or to an amount of mass, weight, time, volume, concentration or percentage is meant to encompass variations of in some embodiments ±20%, in some embodiments ±15%, in some embodiments ±10%, in some embodiments ±5%, in some embodiments ±1%, in some embodiments ±0.5%, and in some embodiments ±0.1% from the specified amount, as such variations are appropriate to perform the disclosed invention(s).

As used herein, ranges can be expressed as from "about" one particular value, and/or to "about" another particular value. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units is also disclosed. For example, if 10 and 15 are disclosed, then 11, 12, 13, and 14 are also disclosed.

The terms "component" and "portion" are used interchangeably throughout the present disclosure to mean a part or portion.

As used herein, "pet food" means a composition intended for oral consumption to meet one or more nutritional needs of a pet. Pet food expressly excludes items that are capable of being orally ingested but are not intended to be ingested, such as rocks. The terms "pet food" and "pet food product" are used interchangeably throughout this disclosure. A pet food may be, for example, in certain embodiments, a treat, a chew, a biscuit, a gravy, a supplement, a topper and any combination thereof.

As used herein, "dietary composition" refers to any composition utilized as part of the diet for a dog. This includes, but is not limited to, a pet food, a treat, a chew, a biscuit, a gravy, a supplement, a topper, and any combination thereof.

As used herein, "nutritionally balanced" and/or "nutritionally complete" refers to a composition capable of sustaining life as the sole dietary ration for an animal, without the need for any other substance, except possibly water.

As used herein, the terms "animal" or "pet" mean a domestic animal including, but not limited to, a domestic dog, cat, horses cow, ferret, rabbit, pig, or the like. Domestic dogs and cats are particular examples of pets. "Dog" includes adult dogs, between 1 year of age and 7 years of age; seniors, older than 7 years of age; and super-seniors, older than 11 years of age. For the purpose of this disclosure, "dog" does not include puppies under the age of 1 year.

All lists of items, such as, for example, lists of ingredients, are intended to and should be interpreted as Markush groups. Thus, all lists can be read and interpreted as items "selected from the group consisting of' ... list of items ... "and combinations and mixtures thereof."

All percentages in the present disclosure are listed as percent by weight on the total weight of the material or mixture, unless explicitly noted otherwise.

In a first aspect, there is provided an edible animal chew. The edible animal chew comprises a partially hydrolysed collagen and alkyl succinate modified starch. The edible animal chew has a tensile toughness greater than 200 MPa. The edible animal chew comprises 8 wt.% to 60 wt.% partially hydrolysed collagen.

In a second aspect, there is provided a method of making an edible animal chew according to the first aspect. The method may comprise:

providing an edible chew composition comprising a partially hydrolysed collagen and alkyl succinate modified starch;
heating the edible chew composition to form a flowable edible chew composition;
extruding the flowable edible chew composition to form an extrudate;
allowing the extrudate to cool and/or harden to form the edible animal chew.

Also disclosed herein is an edible animal chew according to the first aspect, wherein the edible animal chew is produced by a method according to the second aspect.

Edible chews that are resilient against chewing and last longer deliver increased oral care efficacy and an enhanced chewing experience to the animal. The present inventors have found that the partially hydrolysed collagen and succinate modified starch (i.e. used together) provide edible animal chews that have improved physical properties in comparison to previous edible animal chews; for example, one of more of the following properties is improved: hardness, shear force, ductility, tensile strength and toughness. By improving the physical properties of the edible animal chews, the present inventors have devised edible animal chews with an improved, that is, a longer, lasting time.

As used herein, "lasting time" refers to the time taken for an animal to completely consume the product, that is, the time from which the animal first begins to chew the product to the time when the animal swallows the last pieces of the product. The lasting time excludes any time that the animal may be playing with the product but not actually chewing it. By increasing the lasting time of an animal chew, this increases the propensity of the chew to clean the teeth and gums to a greater extent. Additionally, the net calorie intake per chew can be reduced, in view of the increased amount of chewing an animal has to perform to finish the chew.

It should be noted that an animal "chew" is quite distinct from an animal food or pet food. An animal chew differs from an animal food in at least the size of the pieces, the time taken for the animal to consume each piece, in the number of pieces per serving and/or in nutritional content. Thus, the largest pieces of food are smaller than those in a chew, and pieces of food are generally consumed faster than chews. For example, an animal chew may have a longest dimension of at least about 5 cm, optionally at least 7 cm, optionally at least about 10 cm, optionally at least about 15 cm.

**Edible animal chew**

Described herein is an edible animal chew. The edible animal chew comprises a partially hydrolysed collagen and an alkyl succinate modified starch..

Collagen, in its natural state, comprises aggregates (fibrils) of collagen molecules (tropocollagen). Each tropocollagen molecule comprises a triple helix of protein chains (polypeptide strands). Partially hydrolysed collagen, as described herein, may indicate a collagen-derived product, in which collagen, in its natural state, that has been subjected to a process that involves contacting the collagen with water so that at least some of collagen fibrils have untangled from one another and/or tropocollagen triple helices have untangled (i.e. the triple helix has unwound, partially or fully, to form three protein chains) to form the partially hydrolysed collagen. There may or may not have been some hydrolysis and shortening of the peptide strands during the partial hydrolysis. In an embodiment, there may have been little or no shortening of the peptide chains during the partial hydrolysis. The partially hydrolysed collagen has preferably been formed such that at least some of the partially hydrolysed collagen is water insoluble, and preferably at least some of the partially hydrolysed collagen is water soluble. The partially hydrolysed collagen, before inclusion in the animal chew, is typically not gelatin, which is the result of a hydrolysis process that involves shortening the protein chains of collagen to an extent that the gelatin is entirely water soluble (at least at concentrations of about 1-2wt% in water at 25°C). Gelatin, for example, will typically give a clear solution in water, whereas the partially hydrolysed collagen as used herein, will typically form a cloudy mixture with water, with some of the partially hydrolysed collagen being dissolved and some of the partially hydrolysed collagen being suspended in the water (e.g. when mixed with water in a 1:15 wt/wt ratio, i.e. with one part by weight partially hydrolysed collagen to 15 parts by weight water at a temperature of 25°C).

The partially hydrolysed collagen may have a Bloom gel strength of at least 300 g, optionally at least 350 g, optionally at least 400 g, optionally at least 450 g, optionally from 300 g to 600 g, optionally from 300 g to 550 g, as measured in accordance with ISO 9665. The "Bloom gel strength" is a measure of the ability of a material to form a gel. The Bloom gel strength is the weight in grams required to depress the gel a distance of 4 mm with a piston having a cross-sectional area of 1 cm$^2$, the gel first having been cooled for a defined time under defined conditions. Thus, the higher the Bloom gel strength of a material is, the greater the ability of that material to form a gel. The gel for this measurement has a standard concentration of 6.67% and has been kept 17 hours at 10 °C prior to measurement.

The partially hydrolysed collagen may have a molecular weight of at least 60kDa, optionally at least 70 kDa, as measured using gel permeation chromatography (GPC), optionally from 60kDa to 100 kDa, optionally from 70 kDa to 90 kDa, optionally from 75 kDa to 85 kDa, optionally about 80 kDa.

The partially hydrolysed collagen, before incorporation into the edible animal chew, may be formable by a process comprising forming a wet collagen product in the form of a fibrous mass from a hide or skin at a temperature of 50 °C or less, followed by drying the wet collagen product using a contact dryer, optionally having a surface temperature of 150°C or higher, to obtain the partially hydrolysed collagen in the form of a powder.

The partially hydrolysed collagen, before incorporation into the edible animal chew, may have been formed by a method comprising the steps of: producing at a temperature of 50 °C or less a wet collagen product by subjecting a hide or skin to a size reduction step; an alkaline and/or an oxidizing treatment step; and a neutralizing step; followed by drying of said wet collagen product using a contact dryer, to obtain the partially hydrolysed collagen in the form of a powder. Optionally, the drying is carried out using a contact dryer having a surface temperature of more than 150 °C, optionally 155 °C or higher, optionally 160 °C or higher, optionally a surface temperature of 165 ± 4 °C.

Optionally, the temperature of the steps for producing the wet collagen product is kept at 45 °C or less and preferably 40 °C or less. The wet collagen product may be produced by subjecting the hide or skin to a size reduction step, e.g. by cutting or grinding the skin or hide into pieces, and then dispersing the pieces in water. The hide or skin dispersed in the water may be subjected to an alkaline and/or an oxidising treatment. The alkaline treatment may involve the water in which the hide or skin is dispersed containing an alkaline agent, such as a Group I or Group II hydroxide, e.g. sodium hydroxide or calcium hydroxide, in an amount of at least 1wt%, optionally at least 2 wt%, such that the pH of the water is at least 10, optionally at least 11, optionally at least 12, but preferably not greater than 12.5. The alkaline treatment may be for at least 10 seconds to 10 minutes, optionally 10 seconds to five minutes, optionally 10 seconds to a minute,

The oxidising treatment may involve an oxidising agent, such as hydrogen peroxide, being present in the water in which the hide or skin is dispersed, and the oxidising agent may be present with the alkaline agent.

The animal hide or skin is selected from the group consisting of bovine, porcine and poultry. Preferably, the hide or skin is bovine hide or skin.

The neutralizing treatment may result in a pH value of neutral or 6 or less, preferably from 5 to 6. The neutralising treatment may involve contacting the skin or hide with water containing an acid. The acid may be selected from lactic acid, hydrochloric acid, carbon dioxide, acetic acid, ethylene diamine tetraacetic acid, ammonium chloride, propionic acid, and fumaric acid. Carbon dioxide or acetic acid are the preferred acid. The method of partially hydrolysing the collagen may avoid allowing the collagen to contact water having a pH of less than 4.2, optionally less than 5.

Preferably, drying the wet collagen product is carried out within 24 hours after the size reduction of the skin or hide, preferably within 12 hours after the size reduction of the skin or hide, more preferably within 6 hours after the size reduction of the skin or hide, and most preferably within one hour of the neutralisation step.

The partially hydrolysed collagen may be produced in the method described in WO2011/149356, to produce a collagen powder.

Partially hydrolysed collagen may be obtained commercially, e.g. products sold under the trade name Kapro B95, available from D.C.P Ingredients B.V.

In some examples, the edible animal chew comprises 10 wt.% partially hydrolysed collagen. In some examples, the edible animal chew comprises 11 wt.%, in some examples, 12 wt.% , in some examples, 13 wt.%, in some examples, 14 wt.%, in some examples, 15 wt.% , in some examples, 16 wt.%, in some examples, 17 wt.%, in some examples, 18 wt.%, in some examples, 19 wt.%, in some examples, 20 wt.%, in some examples, 21 wt.%, in some examples, 22 wt.%, in some examples 23 wt.%, in some examples 24 wt.%, in some examples, 25 wt.%, in some examples, 26 wt.%, in some examples, 27 wt.% , in some examples, 28 wt.% , in some examples, 29 wt.% , in some examples, 30 wt.% , in some examples, 31 wt.% , in some examples, 32 wt.% , in some examples, 33 wt.% , in some examples, 34 wt.% , in some examples, 35 wt.% , in some examples, 36 wt.% , in some examples, 37 wt.%, in some examples, 38 wt. %, in some examples, 39 wt.% , in some examples, 40 wt.% , in some examples, 41 wt.%, in some examples, 42 wt.%, in some examples, 43 wt.%, in some examples, 44 wt.%, in some examples, 45 wt.%, in some examples, 50 wt.%, in some examples, 55 wt.%, in some examples, about 60 wt.% partially hydrolysed collagen.

In the present invention, the edible animal chew comprises 8 wt.% to 60 wt.% partially hydrolysed collagen. In some examples, the edible animal chew comprises 10 wt.% to 60 wt.% partially hydrolysed collagen. In some examples, the edible animal chew comprises 11 wt.% to 55 wt.%, in some examples, 12 wt.% to 50 wt.%, in some examples, 13 wt.% to 45 wt.%, in some examples, 14 wt.% to 44 wt.%, in some examples, 15 wt.% to 43 wt.%, in some examples, 16 wt.% to 42 wt.%, in some examples, 17 wt.% to 41 wt.%, in some examples, 18 wt.% to 40 wt.%, in some examples, 19 wt.% to 39 wt.%, in some examples, 20 wt.% to 38 wt.%, in some examples, 25 wt.% to 37 wt.%, in some examples, 26 wt.% to 36 wt.%, in some examples, 27 wt.% to 35 wt.%, in some examples, 28 wt.% to 34 wt.%, in some examples, 29 wt.% to 33 wt.%, in some examples, 30 wt.% to 32 wt.%, in some examples, 31 wt.% to 32 wt.% partially hydrolysed collagen. In some examples, the edible animal chew comprises 10 wt.% to 25 wt.%, in some examples, 10 wt.% to 15 wt.%, in some examples, 15 wt.% to 20 wt.%, in some examples, 25 wt.% to 45 wt.%, in some examples, 25 wt.% to 35 wt.%, in some examples, 35 wt.% to 45 wt.% partially hydrolysed collagen.

The edible animal chew comprises an alkyl succinate modified starch. An alkyl succinate modified starch may be defined as a starch having covalently bound thereto an alkyl succinate. An alkyl succinate starch may be defined as a starch in which at least some of the hydroxyl groups of the starch have been reacted with an alkyl succinate or an alkyl succinate precursor, such as an alkyl succinate anhydride, such that the succinate group of the alkyl succinate is attached to the oxygen of the hydroxyl group. The present inventors have found that, while natural collagen (i.e. extracted collagen, but not hydrolysed or detangled) can assist in creating animal chews with high toughness, there is a disadvantage in using it, particularly in extruded products. In an extruded product, the starting materials are typically passed through a heated extruder. However, natural collagen melts at a relatively low temperature, and the resultant viscosity of the composition being extruded is low; this in turn makes the composition difficult to extrude. Similarly, some natural collagen may contain a relatively high amount of fat, which, again, can lead to low viscosity of the composition in a heated extruder. The present inventors have found, however, that the addition of an alkyl succinate modified starch to a composition comprising collagen, whether natural or partially hydrolysed, raises the viscosity of the composition, allowing for more effective extrusion. Additionally, as is shown in the Examples below, embodiments of compositions comprising partially hydrolysed collagen and alkyl succinate modified starch have been found to have improved properties in at least one of the following: hardness, shear force, ductility, tensile strength and toughness.

In some examples, alkyl succinate is a C4 to C12 alkyl succinate. In some examples, alkyl succinate is a C5 to C11 alkyl succinate, in some examples, a C6 to C10 alkyl succinate, in some examples, a C7 to C9 alkyl succinate, in some examples, a C8 alkyl succinate.

In some examples, the succinate is a metal succinate. In some examples, the metal is selected from Group 1 metals, Group 2 metals and Group 3 metals or a combination thereof. In some examples, the metal succinate is selected from sodium succinate, potassium succinate, magnesium succinate, calcium succinate and aluminium succinate or a combination thereof.

Optionally, the alkyl succinate modified starch is selected from sodium octenyl succinate starch, calcium octenyl succinate starch, potassium octenyl succinate starch, aluminium octenyl succinate starch and any combination thereof. Alkyl succinate modified starch is available commercially, e.g. products sold under the trade names Clearam ® and Cleargum ®, available from Roquette ®.

In some examples, the alkyl succinate modified starch acts as an emulsifier. In some examples, the alkyl succinate modified starch binds fats in the edible animal chew composition, reducing the disruptive effects of fat on processing. In some examples, the alkyl succinate modified starch allows water and steam to disperse evenly within the edible animal chew composition during processing.

In some examples, the modified starch is formed by modification of a starch selected from maize starch, potato starch (optionally, high viscosity potato starch), tapioca starch or combinations thereof.

In some examples, the alkyl succinate modified starch is formed by chemical addition of alkyl succinate groups to a hydrolysed dextrin. In some examples, the alkyl succinate modified starch is a thin boiling alkyl succinate modified starch. A thin boiling alkyl succinate modified starch contributes little viscosity during processing under heat and hydration.

The edible animal chew may comprise 1 wt.% or more alkyl succinate modified starch. The edible animal chew may comprise 2 wt.% or more, in some examples, 3 wt.% or more, in some examples, 4 wt.% or more, in some examples, 5 wt.% or more, in some examples, 6 wt.% or more, in some examples, 7 wt.% or more, in some examples, 8 wt.% or more, in some examples, 9 wt.% or more, in some examples, 10 wt.% or more, in some examples, 11 wt.% or more, in some examples, 12 wt.% or more, in some examples, 13 wt.% or more, in some examples, 14 wt.% or more, in some examples, 15 wt.% or more, in some examples, 16 wt.% or more, in some examples, 17 wt.% or more, in some examples, 18 wt.% or more, in some examples, 19 wt.% or more, in some examples, 20 wt.% or more, in some examples, 21 wt.% or more, in some examples, 22 wt.% or more, in some examples, 23 wt.% or more, in some examples, 24 wt.% or more, in some examples, about 25 wt.% alkyl succinate modified starch.

The edible animal chew may comprise 25 wt.% or less, in some examples, 24 wt.% or less, in some examples, 23 wt.% or less, in some examples, 22 wt.% or less, in some examples, 21 wt.% or less, in some examples, 20 wt.% or less, in some examples, 19 wt.% or less, in some examples, 18 wt.% or less, in some examples, 17 wt.% or less, in some examples, 16 wt.% or less, in some examples, 15 wt.% or less, in some examples, 14 wt.% or less, in some examples, 13 wt.% or less, in some examples, 12 wt.% or less, in some examples, 10 wt.% or less, in some examples, 9 wt.% or less, in some examples, 8 wt.% or less, in some examples, 7 wt.% or less, in some examples, 6 wt.% or less, in some examples, 5 wt.% or less, in some examples, 4 wt.% or less, in some examples, 3 wt.% or less, in some examples, 2 wt.% or less, in some examples, about 1 wt.% alkyl succinate modified starch.

The edible animal chew may comprise 1 wt.% to 25 wt.%, in some examples, 2 wt.% to 24 wt.%, in some examples, 3 wt.% to 23 wt.%, in some examples, 4 wt.% to 22 wt.%, in some examples, 5 wt.% to 21 wt.%, in some examples, 6 wt.% to 20 wt.%, in some examples, 7 wt.% to 19 wt.%, in some examples, 8 wt.% to 18 wt.%, in some examples, 9 wt.% to 17 wt.%, in some examples, 10 wt.% to 16 wt.%, in some examples, 11 wt.% to 15 wt.%, in some examples, 12 wt.% to 14 wt.%, in some examples, 12 wt.% to 13 wt.%, in some examples, 13 wt.% 15 wt.% alkyl succinate modified starch. The edible animal chew may comprise 1 wt.% to 10 wt.%, in some examples, 10 wt.% to 20 wt.% alkyl succinate modified starch.

The edible animal chew may comprise partially hydrolysed collagen wherein some is water-soluble and some is water insoluble. Water solubility of the partially hydrolysed collagen may be determined by dispersing an amount of partially hydrolysed collagen in water at a concentration of 1 - 2 wt%, letting the partially hydrolysed collagen swell for 15 minutes at 25 °C, then raising the temperature of the water to 60 °C, and then allowing to stand for 30 minutes at 60 °C. The mixture of water and partially hydrolysed collagen is then centrifuged at 8000 rpm at 40 °C for 7 minutes. The mixture is then filtered using a one-way 0.2 $\mu$m filter at 40 °C. The centrifuging and the filtering serve to remove the non-water-soluble collagen from the mixture. The mixture is then analysed to determine the amount of protein (i.e. the partially hydrolysed collagen) remaining in the mixture, which will be the amount of water-soluble protein (i.e. the partially hydrolysed collagen) in the mixture. The amount of protein remaining in the mixture (in $g/cm^3$) divided by the amount of protein initially added to the water (in $g/cm^3$) gives the amount wt% of water-soluble partially hydrolysed collagen. The amount of protein remaining in the mixture may be determined using any suitable method, e.g. the biuret method that uses tartrate as a reagent in an alkaline copper sulphate solution, and in which the concentration of the protein in the mixture is determined by a colorimetric test using UV/VIS spectroscopy at wavelength 546 nm at 25°C, using a plastic or glass cell with a path length of 1 cm, and the absorbance being measured against a calibration curve that can be produced using standardized protein (e.g. BSA) stock solutions (available commercially, e.g. from Sigma Aldrich or Merck, e.g. available from Merck using the order number 1.10307.0500).

The edible animal chew may comprise 5 wt.% or more of a water-soluble component of partially hydrolysed collagen. In some examples, the edible animal chew comprises 6 wt.% or more, in some examples, 7 wt.% or more, in some examples, 8 wt.% or more, in some examples, 9 wt.% or more, in some examples, 10 wt.% or more, in some examples, 11 wt.% or more, in some examples, 12 wt.% or more, in some examples, 13 wt.% or more, in some examples, 14 wt.% or more, in some examples, 15 wt.% or more, in some examples, 16 wt.% or more, in some examples, 17 wt.% or more, in some examples, 18 wt.% or more, in some 19 wt.% or more, in some examples, 20 wt.% or more, in some examples, 21 wt.% or more, in some examples, 22 wt.% or more, in some examples, 23 wt.% or more, in some examples, 24 wt.% or more, in some examples, 25 wt.% or more, in some examples, 26 wt.% or more, in some examples, 27 wt.% or more, in some examples, 28 wt.% or more, in some examples, 29 wt.% or more, in some examples, about 30 wt.% of a water-soluble component of partially hydrolysed collagen.

The edible animal chew may comprise 30 wt.% or less of a water-soluble component of partially hydrolysed collagen. In some examples, the edible animal chew comprises 29 wt.% or less, in some examples, 28 wt.% or less, in some examples, 27 wt.% or less, in some examples, 26 wt.% or less, in some examples, 25 wt.% or less, in some examples, 24 wt.% or less, in some examples, 23 wt.% or less, in some examples, 22 wt.% or less, in some examples, 21 wt.% or less, in some examples, 20 wt.% or less, in some examples, 19 wt.% or less, in some examples, 18 wt.% or less, in some examples, 17 wt.% or less, in some examples, 16 wt.% or less, in some examples, 15 wt.% or less, in some examples, 14 wt.% or less, in some examples, 13 wt.% or less, in some examples, 12 wt.% or less, in some examples, 11 wt.% or less, in some examples, 10 wt.% or less, in some examples, 9 wt.% or less, in some examples, 8 wt.% or less, in some examples, 7 wt.% or less, in some examples, 6 wt.% or less, in some examples, about 5 wt.% or less.

The edible animal chew may comprise 5 wt.% to 30 wt.%, in some examples, 6 wt.% to 29 wt.%, in some examples, 7 wt.% to 28 wt.%, in some examples, 8 wt.% to 27 wt.%, in some examples, 9 wt.% to 26 wt.%, in some examples, 10 wt.% to 25 wt.%, in some examples, 11 wt.% to 24 wt.%, in some examples, 12 wt.% to 23 wt.%, in some examples, 13 wt.% to 22 wt.%, in some examples, 14 wt.% to 21 wt.%, in some examples, 15 wt.% to 20 wt.%, in some examples, 16 wt.% to 19 wt.%, in some examples, 17 wt.% to 18 wt.% of a water-soluble component of partially hydrolysed collagen e. In some examples, the edible animal chew may comprise 5 wt.% to 10 wt.%, in some examples, 10 wt.% to 15 wt.%, in some examples, 15 wt.% to 20 wt.% of a water-soluble component of partially hydrolysed collagen.

It should be noted that the properties of the partially hydrolysed collagen differ from those of a mixture formed by mixing natural collagen (which is substantially water-insoluble) with gelatine (which is water soluble). In particular, the tensile toughness of an edible animal chew obtained by using partially hydrolysed collagen is greater than that obtained by using a mixture formed by mixing the equivalent amount of natural collagen and gelatine.

The partially hydrolysed collagen may comprise a 30:70 to 70:30 (wt:wt) mixture of water-soluble component and non-water soluble component. In some examples, the partially hydrolysed collagen may comprise a 35:65 to 65:35 (wt:wt) mixture, in some examples, a 40:60 to 60:40 (wt:wt) mixture, in some examples, a 45:55 to 55:45 (wt:wt) mixture, in some examples, about a 50:50 (wt:wt) mixture of a water-soluble component and a non-water-soluble component.

The edible animal chew may comprise (i) partially hydrolysed collagen and (ii) additional natural collagen. In some examples, all of the collagen in the edible animal chew may be partially hydrolysed collagen. In some examples, the additional natural collagen may constitute 1 wt.% or more of the edible animal chew. In some examples, the additional natural collagen may constitute 2 wt.% or more, in some examples, 3 wt.% or more, in some examples, 4 wt.% or more, in some examples, 5 wt.% or more, in some examples, 10 wt.% or more, in some examples, 15 wt.% or more, in some examples, 16 wt.% or more, in some examples, 17 wt.% or more, in some examples, 18 wt.% or more, in some examples, 19 wt.% or more, in some examples, 20 wt.% or more, in some examples, 21 wt.% or more, in some examples, 22 wt.% or more, in some examples, 23 wt.% or more, in some examples, 24 wt.% or more, in some examples, 25 wt.% or more, in some examples, 26 wt.% or more, in some examples, 27 wt.% or more, in some examples, 28 wt.% or more, in some examples, 29 wt.% or more, in some examples, about 30 wt.% of the edible animal chew. In some examples, the additional natural collagen may constitute 30 wt.% or less, in some examples, 29 wt.% or less, in some examples, 28 wt.% or less, in some examples, 27 wt.% or less, in some examples, 26 wt.% or less, in some examples, 25 wt.% or less, in some examples, 24 wt.% or less, in some examples, 23 wt.% or less, in some examples, 22 wt.% or less, in some examples, 21 wt.% or less, in some examples, 20 wt.% or less, in some examples, 19 wt.% or less, in some examples, 18 wt.% or less, in some examples, 17 wt.% or less, in some examples, 16 wt.% or less, in some examples, 15 wt.% or less, in some examples, 10 wt.% or less, in some examples, 5 wt.% or less, in some examples, 4 wt.% or less, in some examples, 3 wt.% or less, in some examples, 2 wt.% or less, in some examples, about 1 wt.% of the edible animal chew. In some examples, the additional natural collagen may constitute 1 wt.% to 30 wt.% , in some examples, 2 wt.% to 29 wt.% , in some examples, 3 wt.% to 28 wt.% , in some examples, 4 wt.% to 27 wt.%, in some examples, 5 wt.% to 26 wt.%, in some examples, 10 wt.% to 25 wt.%, in some examples, 15 wt.% to 24 wt.%, in some examples, 16 wt.% to 23 wt.%, in some examples, 17 wt.% to 22 wt.%, in some examples, 18 wt.% to 21 wt.%, in some examples, 19 wt.% to 20 wt.% of the edible animal chew. In some examples, the additional natural collagen comprises 1 wt.% to 5 wt.%, in some examples, 15 wt.% to 25 wt.%, in some examples, 20 wt.% to 30 wt.% of the edible animal chew. The "additional natural collagen" may be collagen extract having a low fat content, e.g. a fat content of 8wt% or less, preferably 7wt% or less, preferably 6wt% or less, preferably 5wt% or less and/or a high protein content, e.g. a protein content of at least 800 g/kg of the extract (g/kg), optionally at least 850 g/Kg, optionally at least 875 g/kg, optionally at least 900 g/kg (e.g. as measured according to ISO 5983:1998). Natural collagen, as used herein, indicates that the collagen may have been extracted, but has not been hydrolysed or detangled, such that most (e.g. at least 90wt%, e.g. at least 95wt%) or all of the collagen is present in the form of fibrils comprising tropocollagen triple helices and there has been little or no detanglement of the fibrils or of the triple helices and little or no chain shortening of the proteins (e.g. due to hydrolysis). Natural collagen extract, e.g. with low fat content, may be obtained commercially, e.g. products sold under the trade name Valocoll, which is a natural porcine collagen extract, available from Sonac / Darling Ingredients.

In some examples, the edible animal chew comprises a mixture of (i) partially hydrolysed collagen and (ii) additional natural collagen in which 10 wt.% to 100 wt.% of the total amount of collagen is partially hydrolysed collagen. In some examples, the edible animal chew comprises (i) partially hydrolysed collagen and (ii) additional natural collagen in which 10 wt.% to 30 wt.%, in some examples, 15 wt.% to 27 wt.%, in some examples, 20 wt.% to 26 wt.%, in some examples, 21 wt.% to 25 wt.%, in some examples, 22 wt.% to 24 wt.%, in some examples, 23 wt.% to 24 wt.% of the total amount of collagen is partially hydrolysed collagen. In some examples, the edible animal chew comprises (i) partially hydrolysed collagen and (ii) additional natural collagen in which 55 wt.% to 75 wt.%, in some examples, 60 wt.% to 70 wt.%, in some examples, 61 wt.% to 69 wt.%, in some examples, 62 wt.% to 69 wt.%, in some examples, 63 wt.% to 68 wt.%, in some examples, 64 wt.% to 68 wt.%, in some examples, 65 wt.% to 67 wt.%, in some examples, 66 wt.% to 67 wt.% of the total amount of collagen is partially hydrolysed collagen. In some examples, the edible animal chew comprises (i) partially hydrolysed collagen and (ii) additional natural collagen, wherein the relative wt% of (i):(ii) is from 80:20 to 20:80, optionally 70:30 to 30:70, optionally 60:40 to 40:60, optionally 45:55 to 55:45, optionally about 50:about 50. The "additional natural collagen" may be collagen extract having a low fat content, e.g. a fat content of 8wt% or less, preferably 7wt% or less, preferably 6wt% or less, preferably 5wt% or less and/or a high protein content, e.g. a protein content of at least 800 g per kg of the extract (g/kg), optionally at least 850 g/Kg, optionally at least 875 g/kg, optionally at least 900 g/kg (e.g. as measured according to ISO 5983:1998). Optionally, the additional natural collagen may have a fat content of from 8 to 30 wt%, optionally from 8 to 20 wt%.

Collagen is typically obtained in an extract form, and the extract is normally a mixture of the collagen compound and impurities, such as fat. Preferably, the collagen used in the composition or method has a low fat content. Preferably, the fat content in the collagen used in the composition or method is 8wt% or less, preferably 7 wt% or less, preferably 6 wt% or less, preferably 5wt% or less (e.g. as measured by ISO 5983). "The collagen used in the composition or method" may be the partially hydrolysed collagen and/or any other collagen used in the composition/method, such as the "additional natural collagen", which may be collagen extract having a low fat content, e.g. a fat content of 8wt% or less, preferably 7 wt% or less, preferably 6 wt% or less, preferably 5wt% or less and/or a high protein content, e.g. a protein content of at least 800 g per kg of the extract (g/kg), optionally at least 850 g/Kg, optionally at least 875 g/kg, optionally at least 900 g/kg (e.g. as measured according to ISO 5983:1998).

In some examples, the edible animal chew comprises unmodified starch. In some examples, the unmodified starch may be derived from corn, wheat, modified wheat, tapioca, sorghum, potato, sweet potato, rice, oat, beets, barley, soy, other cereals or grains, and mixtures thereof. The unmodified starch may be maize starch or potato starch. The potato starch may be high viscosity potato starch. Tapioca starch, pea starch, mixtures thereof or mixtures of tapioca starch and/or pea starch and any of the aforementioned types may also be used. The starch used may be one type of starch or may alternatively comprise a mixture of starches. Pure or substantially pure starches may be used if desired. The type(s) of starch(es) used may be characterised by starch profiles having all possible proportions of amylopectin, intermediates and amylose. The exact source(s) of starch used is not critical. In general, the starch source(s) is(are) selected on the basis of cost and palatability considerations. The unmodified starch may comprises maize starch, which, when included in an edible animal chew, produces an animal chew with higher strength characteristics than other starches, e.g. potato starch.

The edible animal chew may comprise 5 wt.% or more unmodified starch. The edible animal chew may comprise 7 wt.% or more, in some examples, 10 wt.% or more, in some examples, 11 wt.% or more, in some examples, 12 wt.% or more, in some examples, 13 wt.% or more, in some examples, 14 wt.% or more, in some examples, 15 wt.% or more, in some examples, 17 wt.% or more, in some examples, 20 wt.% or more, in some examples, 21 wt.% or more, in some examples, 22 wt.% or more, in some examples, 23 wt.% or more, in some examples, 24 wt.% or more, in some examples, 25 wt.% or more, in some examples, 27 wt.% or more, in some examples, 30 wt.% or more, in some examples, 33 wt.% or more, in some examples, 35 wt.% or more, in some examples, 36 wt.% or more, in some examples, 37 wt.% or more, in some examples, 38 wt.% or more, in some examples, 39 wt.% or more, in some examples, 40 wt.% or more, in some examples, 45 wt.% or more, in some examples, about 50 wt.% unmodified starch.

The edible animal chew may comprise 50 wt.% or less unmodified starch. The edible animal chew may comprise 45 wt.% or less, in some examples, 40 wt.% or less, in some examples, 39 wt.% or less, in some examples, 38 wt.% or less, in some examples, 37 wt.% or less, in some examples, 36 wt.% or less, in some examples, 35 wt.% or less, in some examples, 33 wt.% or less, in some examples, 30 wt.% or less, in some examples, 27 wt.% or less, in some examples, 25 wt.% or less, in some examples, 24 wt.% or less, in some examples, 23 wt.% or less, in some examples, 22 wt.% or less, in some examples, 21 wt.% or less, in some examples, 20 wt.% or less, in some examples, 17 wt.% or less, in some examples, 15 wt.% or less, in some examples, 14 wt.% or less, in some examples, 13 wt.% or less, in some examples, 12 wt.% or less, in some examples, 11 wt.% or less, in some examples, 10 wt.% or less, in some examples, 7 wt.% or less, in some examples, about 5 wt.% unmodified starch.

The edible animal chew may comprise 5 wt.% to 50 wt.% unmodified starch. The edible animal chew may comprise 7 wt.% to 45 wt.%, in some examples, 10 wt.% to 40 wt.%, in some examples, 11 wt.% to 39 wt.%, in some examples, 12 wt.% to 38 wt.%, in some examples, 13 wt.% to 37 wt.%, in some examples, 14 wt.% to 36 wt.%, in some examples, 15 wt.% to 35 wt.%, in some examples, 17 wt.% to 33 wt.%, in some examples, 20 wt.% to 30 wt.%, in some examples, 21 wt.% to 27 wt.%, in some examples, 22 wt.% to 25 wt.%, in some examples, 23 wt.% to 24 wt.% unmodified starch. The edible animal chew may comprises wt.% to 20 wt.%, in some examples, 17 wt.% to 27 wt.%, in some examples, 30 wt.% to 40 wt.% unmodified starch.

"Unmodified starch" indicates that the starch has not had any chemical species covalently bound to it, e.g. it has not had an alkyl succinate bound to it. However "unmodified starch" may be gelatinized or ungelatinized starch. Gelatinized starch is produced when starch is heated in water, e.g. if the edible animal chew is produced using extrusion in which a composition comprising starch and water is heated. At least a portion of the unmodified starch may be gelatinized unmodified starch. The term "gelatinized unmodified starch" as used herein means unmodified starch that has been processed in the presence of water such that its native granular structure has been destroyed, that the crystalline regions of the unmodified starch have been melted, and the starch converted to a water-soluble form of amylose molecules. Importantly, the effect of such processing is to convert the native unmodified starch, which is essentially indigestible, into a form which is digestible.

The edible animal chew may comprise a plasticiser. The plasticizer may be or comprise water. The plasticiser may comprise water and another plasticiser. The plasticizer or additional plasticiser may comprise a polyol, esters of citric acid or urea. Suitable polyols include glycol, diethylene glycol, alkylene glycols, polyalkylene glycol, sorbitol, glycerol, glycerol monoesters and the like. The plasticiser may comprise glycerol, water or a mixture thereof. The glycerol and/or glycol may function as both a plasticiser and a humectant.

The edible animal chew may comprise a humectant. The humectant may comprise sucrose, sodium chloride, sorbitol, glycerine, starch hydrolysate, glucose, maltose, lactose, gums, galactose, citric acid, alanine, glycine, high fructose corn syrup, tartaric acid, malic acid, xylose, PEG 400, PEG 600, propylene glycol, aminobutyric acid, mannitol, mannose, or lactulose. In some examples, the humectant may be selected from propylene glycol, glycerine, and starch hydrolysate, and combinations thereof.

In embodiment, at least 60wt% of the animal chew comprises partially hydrolysed collagen and/or alkyl succinate modified starch, and optionally a component selected from natural collagen a plasticizer (excluding water), and unmodified starch. In embodiment, at least 70 wt%, optionally at least 75wt%, optionally at least 80wt%, optionally at least 85wt%, optionally at least 90wt% of the animal chew comprises partially hydrolysed collagen and/or alkyl succinate modified starch, and optionally a component selected from natural collagen, a plasticizer (excluding water), and unmodified starch. The remaining weight % may be components other than those listed in this paragraph and those components may be selected from, for example, water, salt, flavourings, palatants, meat powder, e.g. liver powder, vitamins, minerals, flour and preservatives.

In embodiment, at least 70wt% of the animal chew comprises partially hydrolysed collagen and/or alkyl succinate modified starch, a plasticizer (excluding water), and optionally, unmodified starch and/or natural collagen. In embodiment, at least 70wt% of the animal chew comprises partially hydrolysed collagen, alkyl succinate modified starch, a plasticizer (excluding water), unmodified starch and natural collagen. In embodiment, at least 75wt%, optionally at least 80wt%, optionally at least 85wt%, optionally at least 90wt% of the animal chew comprises partially hydrolysed collagen and/or alkyl succinate modified starch, a plasticizer (excluding water), and optionally, unmodified starch and/or natural collagen. The remaining weight % may be components other than those listed in this paragraph and those components may be selected from, for example, water, salt, flavourings, palatants, meat powder, e.g. liver powder, vitamins, minerals, flour and preservatives,

Preferably, the edible animal chew comprises less than 10 wt% fat, optionally less than 8wt% fat, optionally less than 7wt% fat, optionally less than 6wt% fat, optionally less than 5wt% fat, optionally less than 4wt% fat, optionally less than 3wt% fat. This has been found to produce a chew that can be formed easily, and expanded if desired, e.g. formed in an extrusion process, and have desired chew characteristics.

The edible animal chew may be an elongate edible animal chew. The elongate animal chew may have a length, which is along the longest dimension of the animal chew, and a cross section, perpendicular to the length, and the shape of the cross section may be substantially constant along the length of the animal chew. The cross-sectional shape of the animal chew may be any regular or irregular shape. The cross-sectional shape may be selected from a circle, an oval, or an n-sided regular shape, and optionally n is selected from 3 to 8, optionally 4, 5, 6 or 7. The regular shape may, for example, be selected from a triangle, a square, a rectangle, a hexagon, a heptagon and an octagon.

The elongate animal chew may have an internal cellular structure (e.g. it is an expanded, e.g. thermally expanded, animal chew in the form of a solid foam) and/or have a cross-sectional area (i.e. the area of the cross section perpendicular to its length) of at least 900 mm$^2$, optionally at least 1000 mm$^2$, optionally at least 2000 mm$^2$, optionally at least 2000 mm$^2$, optionally at least 3000 mm$^2$, optionally at least 3500 mm$^2$, optionally at least 3700 mm$^2$, optionally at least 4000 mm$^2$. The elongate animal chew may have an internal cellular structure (e.g. it is an expanded animal chew in the form of a solid foam) and/or have a cross-sectional area (i.e. the area of the cross section perpendicular to its length) of from 900 mm$^2$ to 5500 mm$^2$, optionally 1000 mm$^2$ to 5500 mm$^2$, optionally 2000 mm$^2$ to 5500 mm$^2$, optionally 3000 mm$^2$ to 5500 mm$^2$, optionally 4000 mm$^2$ to 5500 mm$^2$.

The elongate edible animal chew may have at least one channel extending at least part way through, optionally all the way through, the animal chew, along the length of the animal chew (i.e. the longest dimension of the animal chew).

The edible animal chew may have an internal cellular structure. The edible animal chew may be in the form of a solid foam. The internal cellular structure may be in the form of pores, which may be open or closed pores, which may have been formed, for example, by the expansion of gases within and/or the passage of gases through the edible animal chew during formation and before solidification, e.g. while being formed by extrusion. The gases may be selected from steam, air, nitrogen and a supercritical fluid, which may be selected from nitrogen and carbon dioxide. The edible animal chew may be a thermally expanded edible animal chew or an aerated animal chew.

The edible animal chew (or the material from which it is made) has a tensile toughness of at least 200 MPa, optionally at least 300 MPa, optionally at least 400 MPa. The edible animal chew (or the material from which it is made) may have a tensile toughness of from 200 MPa to 800 MPa, optionally from 200 MPa to 700 MPa, optionally from 200 MPa to 600 MPa, optionally from 250 MPa to 600 MPa. The tensile toughness may be determined by plotting stress (in MPa) vs strain (in %), up until the breaking point, and determining the area beneath the curve (from 0% strain to the breaking point), which gives the tensile toughness in MPa.

The general method for determining the toughness may be as follows:

(i) cut the material of the edible animal chew into to a tensile bar by using an ISO 527-2 stamp (Zwick Roell; e.g. see Figure 9C);

(ii) provide a tensile rig having upper and lower grips, and place the tensile bar into the lower grips of the tensile rig (e.g. as shown in Figure 9D; so that the full shoulder of the test piece is exposed) and tighten to hold the product (e.g. enough that the product does not slip during testing, but not so tight that the product breaks);

(iii) position the upper grips of the tensile rig to align with the test piece (again, so that the full shoulder of the test piece is exposed). Tighten to hold the product, as for the lower grips.

(iv) minimise any tension or slack in the test piece;
(v) move the upper and lower grips apart by the texture analyser (TA) at 1 mm/s and the resistive force is recorded by the sensor through the breaking point of the test piece (the tensile bar).

The following equipment and apparatus may used (see Figure 9):

(i) Stable Micro Systems TA-HD.plus;
(ii) Tensile rig (A/HDT) - Max. load 500 kg;
(iii) Secateurs (only required for testing a commercially-available edible animal chew);
(iv) Tensile cutter (ISO 527-2; 75mm long, 10mm wide, 5mm in centre) - Zwick Roell;
(v) 100 or 500kg load cell.

The water content of the edible animal chew may be from about 5 to 20 wt%, optionally from about 8 to about 16 wt%, optionally about 10 to about 15 wt%, optionally about 11 to 14wt%, relative to the total weight of the chew.

In an embodiment, the edible animal chew of the present invention exhibits a cohesiveness measured by Texture Profile Analysis (as described herein) of 0.55 or greater. Preferably, the cohesiveness is 0.57 or greater, optionally 0.60 or greater, optionally 0.62 or greater, optionally 0.65 or greater, optionally 0.68 or greater. The higher the cohesiveness value, the greater the propensity of the chew to retain its structure while being chewed; this may assist in improving the cleaning properties of the chew.

The density of the edible animal chew may be 1.5 g cm$^{-3}$ or less, optionally 1.2 g cm$^{-3}$ or less, optionally 1 g cm$^{-3}$ or less. In other embodiments, the density of the edible animal chew is 0.95 g cm$^{-3}$ or less, or 0.90 g cm$^{-3}$ or less, or 0.80 g cm$^{-3}$ or less. Preferably the density is less than 0.80 g cm$^{-3}$, optionally 0.75 g cm$^{-3}$ or less. The density of the edible animal chew may be from 0.5 g cm$^{-3}$ to 1.5 g cm$^{-3}$, optionally from 0.5 g cm$^{-3}$ to 1.2 g cm$^{-3}$, optionally from 0.5 g cm$^{-3}$ to 1 g cm$^{-3}$, optionally from 0.6 g cm$^{-3}$ to 0.9 g cm$^{-3}$, optionally from 0.6 g cm$^{-3}$ to 0.8 g cm$^{-3}$, optionally from 0.7 g cm$^{-3}$ to 0.9 g cm$^{-3}$, optionally from 0.7 g cm$^{-3}$ to 0.8 g cm$^{-3}$.

"Water activity" may be a measurement of the energy status of the water in a system; represented by a quotient between water's partial pressure in the food and pure water's partial pressure. It indicates how tightly water is bound, structurally or chemically, within a substance. This is measured by equilibrating the liquid phase (in the sample) with the vapour phase (in the headspace) and measuring the relative humidity of that space. The water activity (Aw) of the animal chew may be from about 0.40 to about 0.85, optionally from about 0.50 to about 0.85, more preferably from about 0.50 to about 0.80, and more preferably from about 0.60 to about 0.76, even more preferably from about 0.60 to about 0.70.

In some examples, the edible animal chew is a thermally expanded edible animal chew. In some examples, thermal expansion provides an aerated structure to the edible animal chew.

In some examples, the animal is a canine. In some examples, the canine is a dog.

In an aspect, there is also provided: a method of making an edible animal chew of the first aspect, the method comprising:

a. providing an edible chew composition comprising:

partially hydrolysed collagen; and/or
alkyl succinate modified starch

b. heating the edible chew composition to form a flowable edible chew composition;
c. extruding the flowable edible chew composition to form an extrudate;
d. allowing the extrudate to cool and harden to form the edible animal chew.

The extrusion is carried out in an extruder. The flowable edible chew mixture may leave the extruder at a temperature above the melting point of the collagen. The flowable edible chew mixture may leave the extruder at a temperature such that steam is produced from water within the composition. The flowable edible chew mixture may leave the extruder at a temperature of 100 °C or more, and/or preferably a temperature of 150 °C or less. By extruding the composition, such that it exits the extruder at a temperature of 100 °C or more, this will, under normal ambient pressure (e.g. about 100 kPa), generate steam. The steam then causes expansion of the product, e.g. forming a cellular structure within the animal chew or, in other words, a foamed chew, which becomes a solid foam when the composition solidifies on cooling. This often leads to the animal chew having a density of 1 .0 g cm$^{-3}$ or less.

Optionally, the composition leaves the extruder at a temperature of from about 105°C to about 130°C, preferably at least 110°C to 125°C , and preferably from 115°C to 125°C, optionally from 118°C to 123°C, optionally about 120°C. These temperature ranges have been found to result in an expanded animal chew with desired chew characteristics, include strength. This may be termed thermal expansion of the chew.

Optionally, if the chew is not to be expanded (at least by thermal means), the flowable edible chew mixture may leave the extruder at a temperature of less than 100 °C, e.g. a temperature of between 40 °C and 90 °C, optionally between 50 °C and 70 °C. Preferably, even if the flowable edible chew mixture does not leave the extruder at a temperature of 100 °C or more, preferably the flowable edible chew mixture has been heated to a temperature within the extruder of at least 90 °C, optionally from 90 °C to 120 °C, optionally at least 100 °C, optionally from 100 °C to 120 °C, optionally from 100 °C to 110 °C.

In an embodiment, the edible chew mix is formed in a barrel extruder.

In an embodiment, the temperature of the barrel in the barrel extruder increases in the extrusion direction; this is particularly preferred when producing expanded chews, i.e. chews having an internal cellular structure.

The extruder may be a single screw extruder or a twin screw extruder.

The screw may rotate at a speed of from 80 rpm to 300 rpm, optionally a speed of from 80 rpm to 200 rpm, optionally a speed of from 80 rpm to 180 rpm, optionally a speed of from 80 rpm to 160 rpm.

The specific mechanical energy (SME) applied by the extruder may be from 60 kWhkg$^{-1}$ to 120 kWhkg$^{-1}$, optionally from 80 kWhkg$^{-1}$ to 120 kWhkg$^{-1}$, optionally from 90 kWhkg$^{-1}$ to 115 kWhkg$^{-1}$, optionally from 95 kWhkg$^{-1}$ to 115 kWhkg$^{-1}$.

In an embodiment, the extrusion is supercritical fluid extrusion, such that expansion of the flowable edible chew mixture is effected, such that, on cooling, the edible chew has an internal cellular structure. The supercritical fluid may be selected from nitrogen and carbon dioxide.

In aspect, there is also provided an edible animal chew producible by a method described herein.

Preferably the components of edible chew mixture are introduced into a cooker extruder, preferably a twin-screw cooker extruder, and the cooker extruder, during the act of extruding the edible chew mixture, subjects it to heating, to produce the flowable edible chew mixture, and shear, to homogenise and mix the components thoroughly, and the flowable edible chew mixture leaves the extruder, optionally with expansion of the mixture such that an internal cellular structure is formed in the mixture, and the edible chew mixture allowed to cool and harden to form the edible animal chew.

The edible animal chew of the present invention comprises a partially hydrolysed collagen and an alkyl succinate modified starch. The edible animal chew may further comprise an unmodified starch. The partially hydrolysed collagen, the alkyl succinate modified starch and the unmodified starch may be as defined herein. In an embodiment, there is also provided an edible animal chew comprising a partially hydrolysed collagen and an alkyl succinate modified starch, an unmodified starch and protein extract, e.g. natural collagen extract, which may be protein extracted from animal skin, e.g. pork skin protein. In an embodiment, there is provided an edible animal chew that comprises an unmodified starch, which may be maize starch, partially hydrolysed collagen, an alkyl (e.g. octenyl) succinate modified starch, an protein extract, e.g. natural collagen extract, which may be protein extracted from animal skin, e.g. pork skin protein, and optionally other ingredients, which may be selected from salt, flavourings, vitamins, minerals, emulsifiers and flour. In an embodiment, there is provided an edible animal chew that comprises an unmodified starch in 45 to 55 parts by weight, which may be maize starch, partially hydrolysed collagen in 25 to 35 parts by weight, an alkyl (e.g. octenyl) succinate modified starch in 5 to 15 parts by weight, an protein extract, e.g. natural collagen extract, which may be protein extracted from animal skin, e.g. pork skin protein, in 5 to 15 parts by weight, and other ingredients in 0 to 10% in parts by weight, the other ingredients may be selected from salt, flavourings, vitamins, minerals, emulsifiers and flour.

One of ordinary skill in the art will recognize that additional embodiments or implementations are possible without departing from the teachings of the present disclosure or the scope of the claims that follow. This detailed description, and particularly the specific details of the exemplary embodiments and implementations disclosed herein, is given primarily for clarity of understanding, and no unnecessary limitations are to be understood therefrom, for modifications will become obvious to those skilled in the art upon reading this disclosure and may be made without departing from the scope of the claimed invention(s).

## EXAMPLES

The following illustrate examples of the compositions, methods and other aspects described herein. Thus, these Examples should not be considered as limitations of the present disclosure, but are merely in place to teach how to make embodiments of the edible animal chew, and to illustrate embodiments of the method.

### Example 1 - animal skin protein as a source of collagen

The following example is not according to the invention and is present for illustration purposes only.

Edible animal chews formed by combining pork skin protein (PSP) with sodium octenyl succinate starch (NaOSS) in an 80:20 ratio were produced by cooker extrusion. A variety of control samples were formed from 1) 100% pork skin protein; 2) 98.5 wt.% pork skin protein and 1.5 wt.% of a standard emulsifier [diacetyl tartaric acid ester of mono- and diglycerides (DATEM)]; 3) 80 wt.% pork skin protein and 20 wt.% wheat flour (WF); 4) 78.5 wt.% pork skin protein, 20 wt.% wheat flour and 1.5 wt.% DATEM. The control samples were labelled as follows:

| Control Sample Name | Control Sample Composition |
|---|---|
| Powders Sample 1 | 20 wt.% NaOSS, 80 wt.% PSP |
| Powders Sample 2 | 20 wt.% WF, 1.5 wt.% DATEM, 78.5 wt.% PSP |
| Powders Sample 3 | 20 wt.% WF, 80 wt.% PSP |
| Powders Sample 4 | 98.5 wt.% PSP, 1.5 wt.% DATEM |
| Powders Sample 5 | 100 wt.% PSP |

These control sample compositions were extruded under the following conditions:

Table 1 - Extrusion conditions

| | Powders | Water | Glycerol | Steam | Specific Mechanical Energy (SME) | Screw Speed |
|---|---|---|---|---|---|---|
| | kg/h | kg/h | kg/h | kg/h | Wh/kg | RPM |
| Powders Sample 1 | 100 | 13 | 15 | 13 | 60 | 225 |
| Powders Sample 2 | 100 | 13 | 15 | 13 | 55 | 400 |
| Powders Sample 3 | 100 | 13 | 15 | 13 | 57 | 400 |
| Powders Sample 4 | 100 | 14 | 15 | 13 | 39 | 300 |
| Powders Sample 5 | 100 | 13 | 15 | 13 | 41 | 300 |

In all cases the vacuum was set at -0.6 bar gauge, with barrel temperature control over the seven barrel (B1-B7) extruder set as follows:

| Nozzle | Barrel Temperature |
|---|---|
| B1 | Uncontrolled |
| B2 | 150°C |
| B3 | 150°C |
| B4 | Uncontrolled |
| B5 | 130°C |
| B6 | 110°C |
| B7 | 90°C |

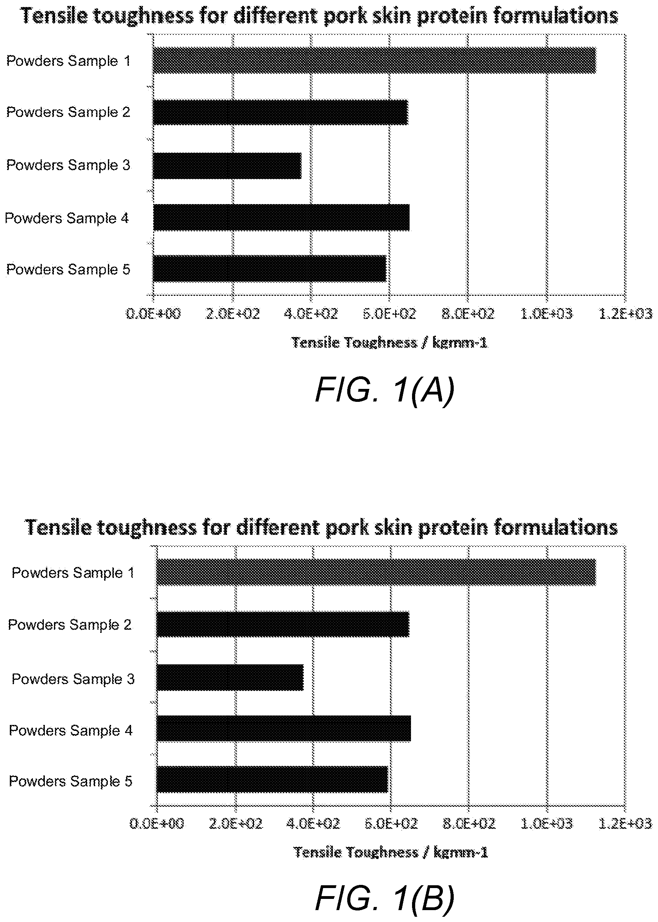

The tensile toughness for the pork skin protein and sodium octenyl succinate starch chew was compared with those of the control samples (see Figure 1A). As shown in Figure 1A, the tensile toughness of the edible animal chew containing pork skin protein and sodium octenyl succinate starch is significantly higher than those of the control samples. Depending on the control sample used as a reference, the performance improvement ranges from 80% to 200%. It is believed that a reason for this marked improvement in the tensile toughness is due to the clear and large increase in the ratio of SME (mechanical energy transferred by the extruder) to rotations per minute (RPM) seen for samples containing sodium octenyl succinate starch (see Figure 1B).

**Example 2 - partially hydrolysed collagen**

The following examples N3, N8, N12, N13, N14, N15, N16 and N17 are according to the invention. Examples N1, N2, N4, N5, N6, N7, N9, N10 and N11 are not according to the invention and are present for illustration purposes only. Edible animal chews were formed by combining partially hydrolysed collagen, maize starch, high viscosity potato starch (HV starch) and sodium octenyl succinate starch in varying proportions (including combinations in which at least one ingredient was omitted) and processing the mixture in a cooker extruder. The proportions of each ingredient used are given in Table 2. Although it is possible to extrude formulations containing more than 80 wt.% partially hydrolysed collagen, in practice this generates excessive viscosity in the extruder and was not studied.

Table 2 (partially hydrolysed collagen is as described herein and contains approximately 50 wt.% non-water soluble component and 50 wt.% water soluble component).

| Blend Code | Run Order | % Maize Starch | Partially hydrolysed collagen | NaOSS | HV Potato Starch |
|---|---|---|---|---|---|
| | | wt. % | wt.% | wt.% | wt% |
| N1 | 6 | 50 | 0 | 0 | 50 |
| N2 | 10 | 20 | 80 | 0 | 0 |
| N3 | 12 | 50 | 40 | 10 | 0 |
| N4 | 9 | 50 | 0 | 10 | 40 |
| N5 | 3 | 10 | 80 | 10 | 0 |
| N6 | 4 | 0 | 50 | 0 | 50 |
| N7 | 13 | 40 | 0 | 10 | 50 |
| N8 | 8 | 0 | 40 | 10 | 50 |
| N9 | 7 | 0 | 80 | 3.3 | 16.7 |
| N10 | 16 | 0 | 80 | 6.7 | 13.3 |
| N11 | 11 | 50 | 33.3 | 0 | 16.7 |
| N12 | 15 | 50 | 46.7 | 3.3 | 0 |
| N13 | 17 | 25 | 40 | 10 | 25 |
| N14 | 2 | 22.5 | 22.5 | 5 | 50 |
| N15 | 1 | 24.5 | 45.5 | 5.5 | 24.5 |
| N16 | 14 | 24.5 | 45.5 | 5.5 | 24.5 |
| N17 | 5 | 24.5 | 45.5 | 5.5 | 24.5 |

Two edible animal chews were formed for each blend, one extruded under thermal expansion (no vacuum applied) and one extruded without thermal expansion for texture testing purposes. The extrusion conditions are shown in Tables 3 and 4.

Table 3 - extrusion under thermal expansion:

| | N1 | N2 | N3 | N4 | N5 | N6 | N7 | N8 | N9 |
|---|---|---|---|---|---|---|---|---|---|
| Powders (kgh$^{-1}$) | 95.0 | 95.0 | 95.0 | 95.0 | 95.0 | 95.0 | 95.0 | 95.0 | 95.0 |
| Water (kgh$^{-1}$) | 18.0 | 18.0 | 18.0 | 18.0 | 18.0 | 18.0 | 18.0 | 18.0 | 18.0 |
| Glycerol (kgh$^{-1}$) | 22.0 | 22.0 | 22.0 | 22.0 | 22.0 | 22.0 | 22.0 | 22.0 | 22.0 |
| EPP (bar) | 14.0 | 67.0 | 36.0 | 10.0 | 56.0 | 47.0 | 10.6 | 28.0 | 60.0 |
| B2 (°C) | 103.0 | 83.0 | 104.0 | 102.0 | 97.0 | 98.0 | 99.0 | 99.0 | 96.0 |
| B3 (°C) | 107.0 | 98.0 | 101.0 | 99.0 | 97.0 | 102.0 | 98.0 | 97.0 | 104.0 |
| B5 (°C) | 110.0 | 114.0 | 109.0 | 111.0 | 112.0 | 110.0 | 110.0 | 108.0 | 112.0 |
| B6 (°C) | 119.0 | 121.0 | 120.0 | 119.0 | 121.0 | 118.0 | 119.0 | 119.0 | 121.0 |
| B7 (°C) | 119.0 | 120.0 | 120.0 | 119.0 | 121.0 | 117.0 | 119.0 | 119.0 | 121.0 |
| SME (kWhkg$^{-1}$) | 111.0 | 108.0 | 117.0 | 108.0 | 110.0 | 110.0 | 108.0 | 115.0 | 108.0 |

(continued)

|  | N1 | N2 | N3 | N4 | N5 | N6 | N7 | N8 | N9 |
|---|---|---|---|---|---|---|---|---|---|
| **RPM** | 230.0 | 130.0 | 200.0 | 208.0 | 210.0 | 150.0 | 213.0 | 185.0 | 165.0 |
|  | **N10** | **N11** | **N12** | **N13** | **N14** | **N15** | **N16** | **N17** |  |
| **Powders (kgh⁻¹)** | 95.0 | 95.0 | 95.0 | 95.0 | 95.0 | 95.0 | 95.0 | 95.0 |  |
| **Water (kgh⁻¹)** | 18.0 | 18.0 | 18.0 | 18.0 | 18.0 | 18.0 | 18.0 | 18.0 |  |
| **Glycerol (kgh⁻¹)** | 22.0 | 22.0 | 22.0 | 22.0 | 22.0 | 22.0 | 22.0 | 22.0 |  |
| **EPP (bar)** | 55.0 | 36.0 | 43.4 | 39.0 | 21.0 | 36.6 | 37.2 | 39.0 |  |
| **B2 (°C)** | 95.0 | 108.0 | 99.0 | 100.0 | 99.0 | 99.0 | 99.0 | 102.0 |  |
| **B3 (°C)** | 101.0 | 99.0 | 99.0 | 102.0 | 97.0 | 107.0 | 99.0 | 100.0 |  |
| **B5 (°C)** | 108.0 | 107.0 | 109.0 | 68.0 | 111.0 | 112.0 | 109.0 | 109.0 |  |
| **B6 (°C)** | 119.0 | 119.0 | 121.0 | 119.0 | 119.0 | 117.0 | 119.0 | 119.0 |  |
| **B7 (°C)** | 120.0 | 119.0 | 122.0 | 118.0 | 118.0 | 119.0 | 119.0 | 118.0 |  |
| **SME (kWhkg⁻¹)** | 109.0 | 112.0 | 114.0 | 115.0 | 115.0 | 111.0 | 115.0 | 113.0 |  |
| RPM | 200.0 | 165.0 | 170.0 | 195.0 | 215.0 | 203.0 | 145.0 | 180.0 |  |

Table 4 - no expansion

|  | N1 | N2 | N3 | N4 | N5 | N6 | N7 | N8 | N9 |
|---|---|---|---|---|---|---|---|---|---|
| **Powders (kgh⁻¹)** | 95 | 95 | 95 | 95 | 95 | 95 | 95 | 95 | 95 |
| **Water (kgh⁻¹)** | 17 | 17 | 17 | 17 | 17 | 17 | 17 | 17 | 17 |
| **Glycerol (kgh⁻¹)** | 21 | 21 | 21 | 21 | 21 | 21 | 21 | 21 | 21 |
| **B2 (°C)** | 112 | 102 | 105 | 109 | 104 | 113 | 114 | 120 | 101 |
| **B3 (°C)** | 116 | 106 | 104 | 107 | 106 | 102 | 110 | 107 | 106 |
| **B5 (°C)** | 83 | 101 | 88 | 85 | 95 | 94 | 88 | 89 | 96 |
| **B6 (°C)** | 66 | 67 | 66 | 67 | 68 | 66 | 67 | 66 | 65 |
| **B7 (°C)** | 56 | 62 | 57 | 57 | 58 | 57 | 56 | 58 | 58 |
| **Vacuum (bar)** | 0.31 | 0.33 | 0.31 | 0.31 | 0.3 | 0.31 | 0.31 | 0.31 | 0.3 |
| **RPM** | 155 | 90 | 138 | 140 | 125 | 95 | 140 | 155 | 90 |
| **SME (kWhkg⁻¹)** | 95 | 110 | 92 | 100 | 95 | 95 | 99 | 95 | 101 |
|  |  |  |  |  |  |  |  |  |  |
|  | **N10** | **N11** | **N12** | **N13** | **N14** | **N15** | **N16** | **N17** |  |
| **Powders (kgh⁻¹)** | 95 | 95 | 95 | 95 | 95 | 95 | 95 | 95 |  |
| **Water (kgh⁻¹)** | 17 | 17 | 17 | 17 | 17 | 17 | 17 | 17 |  |
| **Glycerol (kgh⁻¹)** | 21 | 21 | 21 | 21 | 21 | 21 | 21 | 21 |  |
| **B2 (°C)** | 108 | 114 | 108 | 112 | 97 | 110 | 110 | 109 |  |
| **B3 (°C)** | 101 | 119 | 116 | 116 | 112 | 113 | 113 | 111 |  |
| **B5 (°C)** | 96 | 96 | 93 | 91 | 99 | 90 | 90 | 89 |  |
| **B6 (°C)** | 65 | 67 | 66 | 65 | 78 | 67 | 67 | 66 |  |

(continued)

| | N10 | N11 | N12 | N13 | N14 | N15 | N16 | N17 | |
|---|---|---|---|---|---|---|---|---|---|
| B7 (°C) | 58 | 59 | 58 | 58 | 71 | 57 | 57 | 57 | |
| Vacuum (bar) | 0.31 | 0.31 | 0.31 | 0.3 | 0.32 | 0.31 | 0.31 | 0.3 | |
| RPM | 95 | 115 | 95 | 140 | 172 | 100 | 100 | 140 | |
| SME (kWhkg$^{-1}$) | 100 | 98 | 100 | 93 | 95 | 100 | 100 | 95 | |
| | | | | | | | | | |

The tensile strength, ductility, toughness, shear force, hardness, expanded cross section, expanded hot strength and water activity of each edible animal chew formed above was determined. The results are provided in Tables 5. Test procedures are described later.

Table 5

| Blend Code | Tensile Strength/MPa | Ductility/% | Toughness/MPa | Shear Force/kg | Hardness |
|---|---|---|---|---|---|
| N1 | 2.27 | 67.21 | 112.83 | 12.72810 | 2.454 |
| N2 | 2.51 | 310.13 | 484.77 | 55.9138 | 1.808 |
| N3 | 1.4 | 278.52 | 288.05 | 29.127 | 1.862 |
| N4 | 2.2 | 58.96 | 94.39 | 13.4621 | 2.368 |
| N5 | 3.06 | 399.01 | 681.43 | 65.7718 | 1.749 |
| N6 | 1.68 | 224.73 | 251.51 | 45.5163 | 1.663 |
| N7 | 2.15 | 63.59 | 99.88 | 13.7588 | 2.2 |
| N8 | 1.5 | 247.79 | 282.38 | 29.1715 | 1.619 |
| N9 | 3.17 | 386.4 | 702.24 | 78.4549 | 1.998 |
| N10 | 2.93 | 378.57 | 664.71 | 68.2958 | 1.808 |
| N11 | 1.95 | 186.71 | 256.59 | 29.6097 | 1.93 |
| N12 | 1.94 | 214.89 | 303.24 | 36.2693 | 2.254 |
| N13 | 1.6 | 273.93 | 318.07 | 32.0543 | 1.797 |
| N14 | 1.26 | 119.11 | 123.48 | 18.1328 | 2.255 |
| N15 | 1.72 | 187.89 | 239.6 | 29.0367 | 1.954 |
| N16 | 1.73 | 202.55 | 250.99 | 35.293 | 1.928 |
| N17 | 1.85 | 254.17 | 337.84 | 33.287 | 2.003 |
| Blend Code | Expanded Cross Section/mm$^2$ | Expanded Hot Stregth/% | Water Activity/1 | | |
| N1 | 992 | 16 | 0.755 | | |
| N2 | 3385 | 87 | 0.682 | | |
| N3 | 4077 | 69 | 0.702 | | |
| N4 | 1032 | 14 | 0.71 | | |
| N5 | 3046 | 81 | 0.692 | | |
| N6 | 4170 | 75 | 0.694 | | |
| N7 | 1092 | 19 | 0.665 | | |
| N8 | 6293 | 73 | 0.691 | | |

(continued)

| Blend Code | Expanded | Expanded Hot | Water |
|---|---|---|---|
| | Cross Section/mm$^2$ | Stregth/% | Activity/1 |
| N9 | 3332 | 81 | 0.66 |
| N10 | 3785 | 77 | 0.679 |
| N11 | 5111 | 73 | 0.69 |
| N12 | 3956 | 80 | 0.707 |
| N13 | 4801 | 73 | 0.672 |
| N14 | 4520 | 63 | 0.698 |
| N15 | 4222 | 83 | 0.664 |
| N16 | 4990 | 79 | 0.685 |
| N17 | 4798 | 72 | 0.684 |

Expansion Characteristics

The behaviour of partially hydrolysed collagen formulations under thermal expansion was investigated. In order to achieve this the extruder was reconfigured with a hollow cylinder nozzle. All other aspects of the extruder configuration were equivalent. Thermally expanding the material into a hollow cylindrical shape has been found to provide a useful gauge for comparing expansion properties as the shape is prone to sagging presenting a useful "worst case" scenario. This is due to the void in the middle of the shape. The outer wall of the hollow cylinder nozzle is perfectly circular.

*Definition of "Expanded Hot Strength"*

The product is placed on a bench to cool following extrusion and thermal expansion. On the bench the product will sag and distort if the material does not have enough strength when hot. It is critical that this effect be minimised in order for a viable product to be made in a desired shape. After cooling we can measure two attributes of the expansion using simple geometry. These are termed the Expanded Hot Strength (%) which is essentially a ratio of the height (H) and width (W) on the cut face of an extruded cylindrical product. For a product that does not sag these two parameters would be the same and the Expanded Hot Strength would be 100%. For a product that totally collapses the width (W) would be much larger than the height (H) giving rise to an Expanded Hot Strength that tends towards 0%. This is defined mathematically in Equation 1.

$$\text{Expanded Hot Strength (\%)} = \frac{H}{W} \times 100 \qquad (1)$$

*Definition of "Expanded Cross Section"*

A key benefit of thermal expansion is that the volume of the product can be much larger for a given weight (low density). Larger chews are more challenging to eat and last longer, increasing stimulation for the animal. For this reason, the size to which a material can be expanded and maintain its shape is an important parameter. This has been compared by measuring the area of the cross-section of the chew, which can be approximated to an elliptical shape after sagging. This is defined mathematically in Equation 2.

$$\text{Expanded Cross Section (mm}^2\text{)} = \pi HW \qquad \text{(Area of an ellipse)} \qquad (2)$$

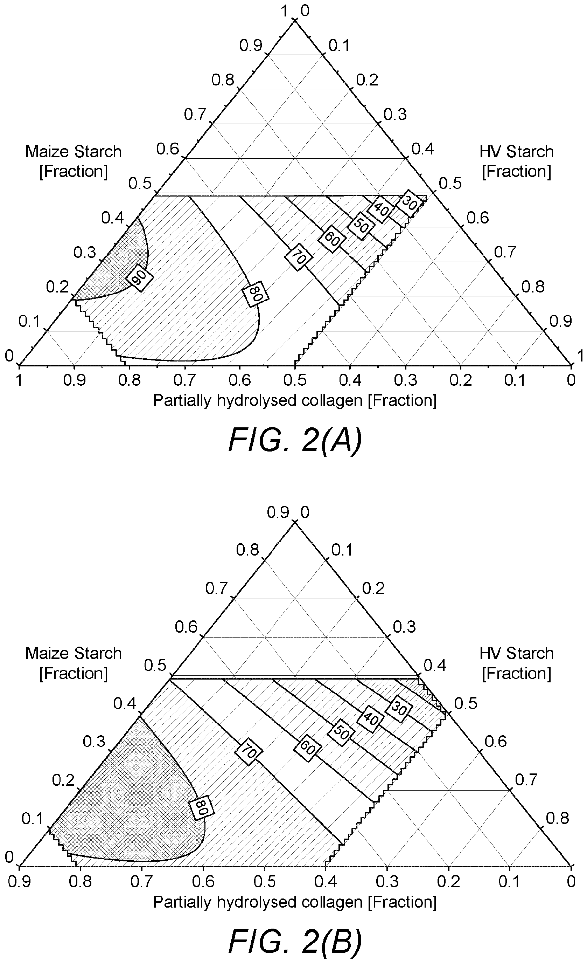

Figures 2 shows how the expanded hot strength (%) changes when the proportions of maize starch, HV potato starch and partially hydrolysed collagen are altered with no inclusion (Figure 2A) and with 10 wt.% of hydrolysed sodium octenyl succinate starch (Figure 2B). (The triangular contour plots were of Figures 2A and 2B, and those in the other Figures, were produced using "MODDE" software, available from "Umetrics".) In both cases the overriding trend is an increase in hot strength with increasing inclusion of partially hydrolysed collagen. Two subtler trends can be observed.

The first is that in both plots, maize starch is more conducive to driving hot strength than HV potato starch, especially at higher inclusions of partially hydrolysed collagen. Secondly, a slightly higher hot strength is possible when hydrolysed sodium octenyll succinate starch is not included in the recipe (although this effect is minor).

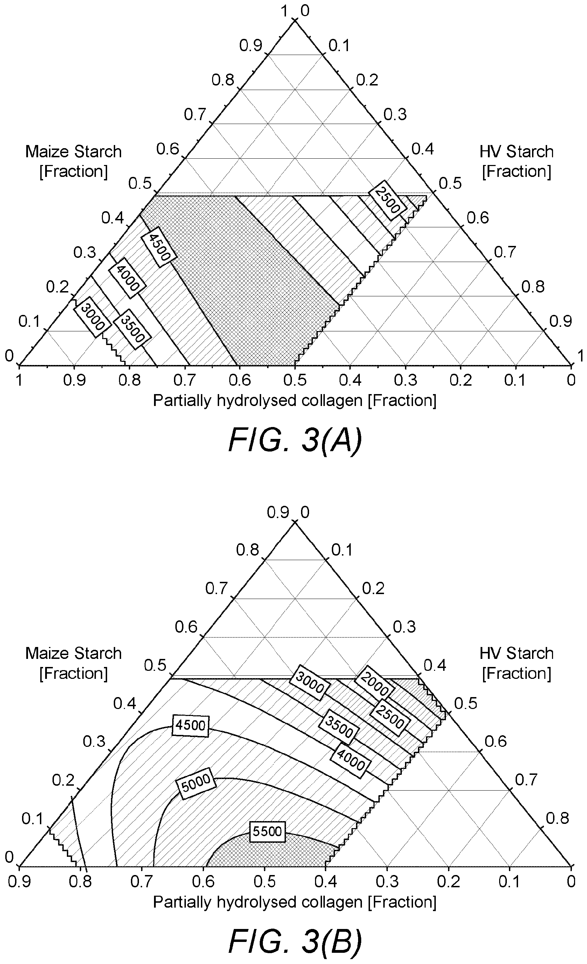

Figure 3 shows how the expanded cross section (mm²) changes when the proportions of maize starch, HV potato starch and partially hydrolysed collagen are altered with no inclusion (Figure 3A) and with 10 wt.% inclusion of hydrolysed sodium octenyll succinate starch (Figure 3B). The overriding trend is that the expanded cross section (mm²) increases with increasing inclusion of partially hydrolysed collagen up to a maximum point after which the inclusion of further partially hydrolysed collagen gives rise to a reduction in the expanded cross section. The highest expanded cross section in the study is achieved in a formulation with 10 wt.% hydrolysed sodium octenyl succinate starch, 30 wt.% to 50 wt.% HV potato starch and 35 wt.% to 60 wt.% partially hydrolysed collagen with the absence of maize starch.

## Expanded Product Appearance

The appearance of the products extruded under thermal expansion was compared. In general, very low levels of partially hydrolysed collagen (N1, N4 and N7) resulted in total collapse of the products whilst very high levels of partially hydrolysed collagen (N2, N5, N9 and N10) resulted in a dull brown product with small bubbles and a "bready" appearance. Larger bubble structures were visible for products with higher values for the expanded cross section parameter which tend to be in the mid-range of partially hydrolysed collagen inclusion (N3, N6, N8, N11, N12, N13, N14, N15, N16, and N17).

## Tensile Properties

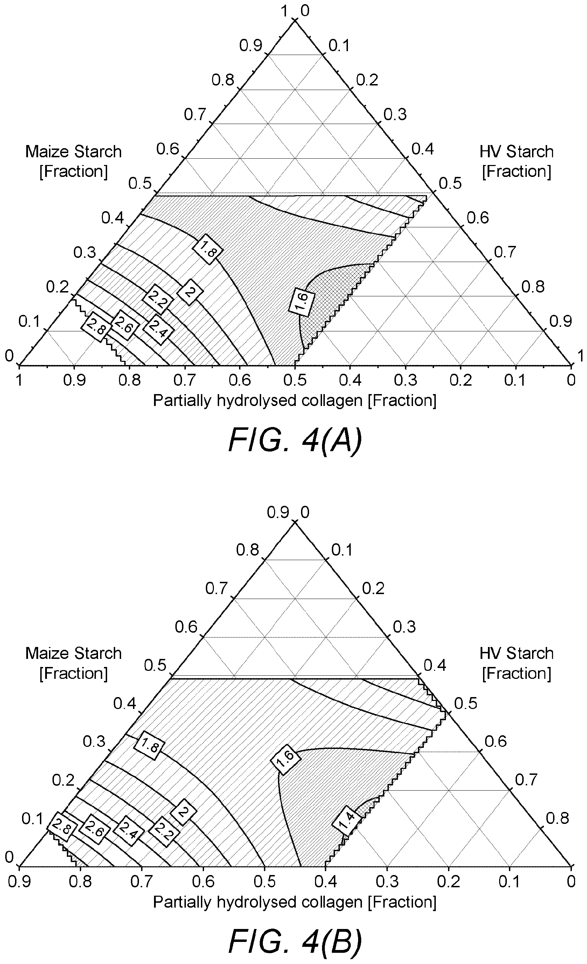

The overriding trend in the tensile properties of the extruded products are that the tensile strength (Figure 4), ductility and toughness all increase with increasing inclusion of partially hydrolysed collagen. Maize starch provides greater tensile strength than HV potato starch. Slightly tougher textures are generated when 10 wt.% hydrolysed sodium octenyl succinate starch is included. A description of the texture methods used to generate this data can be found below.

## Hardness and Shear Resistance

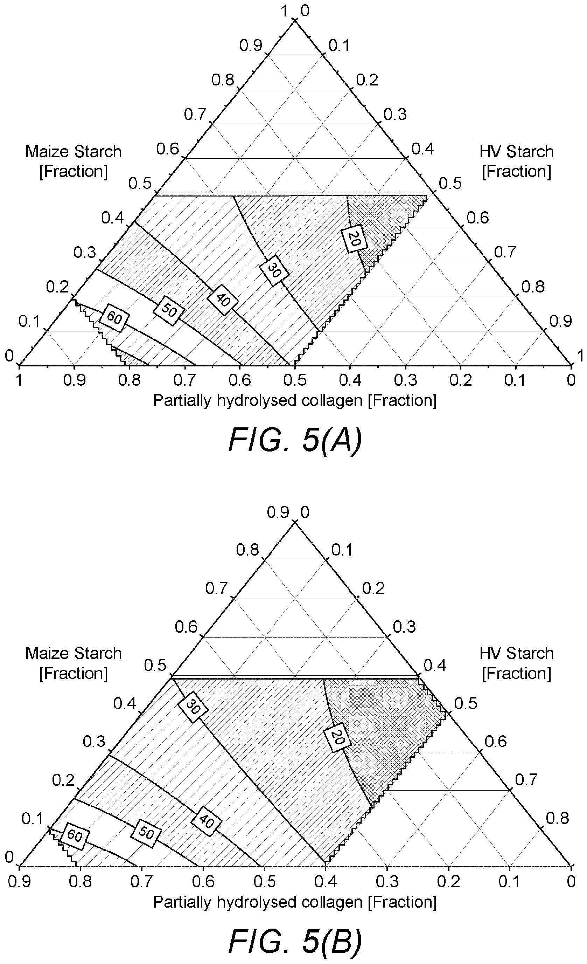

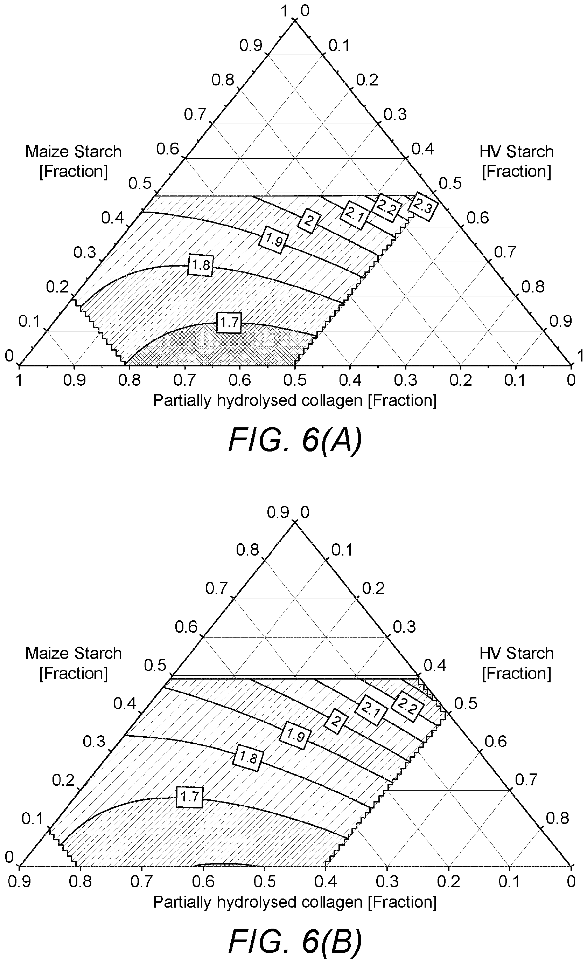

The shear resistance (Figure 5) increases substantially with increase inclusion of partially hydrolysed collagen. The hardness (Figure 6) as measured with the "conical probe" method broadly decreases with increased inclusion of partially hydrolysed collagen. This shows a benefit of using partially hydrolysed collagen in dog chew formulations as the material is more difficult to break down by chewing (shear resistant) whilst being less likely to induce tooth fracture (softer texture). The function is enhanced whilst safety is improved. The trends are broadly the same with 10 wt.% hydrolysed sodium octenyl succinate starch as without its inclusion. A description of the texture methods used to generate this data can be found below.

## **Example 3**

Several other edible animal chews containing partially hydrolysed collagen and sodium octenyl succinate starch have been formulated by the inventors, with various additional components, which may include concentrated collagen extract, unmodified starch (maize starch and/or HV potato starch), plasticisers (water and/or glycerol) and various flavourings and other additives. The formulations are given in Table 6. Various tests were performed in these formulations, with the results given in Table 7.

Table 6

| | Thermal Expansion | | | |
| --- | --- | --- | --- | --- |
| | Chewhide Mark I [wt.%] | Chewhide Mark II Alternate A [wt.%] | Chewhide Mark II Alternate B [wt.%] | Chewhide Mark II Alternate C [wt.%] |
| Partially hydrolysed bovine collagen | 30-40 | 10-30 | 10-30 | 10-30 |
| Natural porcine collagen extract | - | 1-5 | - | - |
| Pork skin protein | - | - | 1-5 | 1-5 |
| Glycerol | 10-20 | 10-20 | 10-20 | 10-20 |

(continued)

| | Thermal Expansion | | | |
|---|---|---|---|---|
| | Chewhide Mark I [wt.%] | Chewhide Mark II Alternate A [wt.%] | Chewhide Mark II Alternate B [wt.%] | Chewhide Mark II Alternate C [wt.%] |
| Water | 10-15 | 10-15 | 10-15 | 10-15 |
| Maize Starch | 10-15 | 35-40 | 35-40 | 35-40 |
| HV Starch | 5-15 | - | - | — |
| OSA starch | 5-10 | 1-5 | 1-5 | - |
| Modified OSA starch | - | - | - | 1-5 |
| Other additives (including salt, flavourings, vitamins, minerals, emulsifier, flour) | 1-10 | 1-10 | 1-10 | 1-10 |
| | | | | |
| | Gas Expansion | | | |
| | Chewhide Mark II Alternate A [wt.%] | Chewhide Mark II Alternate B [wt.%] | Chewhide Mark II Alternate A [wt.%] | Chewhide Mark II Alternate B [wt.%] |
| Partially hydrolysed bovine collagen | 20-30 | 20-30 | 20-30 | 20-30 |
| Natural porcine collagen extract | 20-30 | 20-30 | - | - |
| Drinde 1015 / SF | - | - | 20-30 | 20-30 |
| Glycerol | 10-20 | 10-20 | 10-20 | 10-20 |
| Water | 10-20 | 5-12 | 5-12 | 5-12 |
| OSA starch | 10-15 | - | - | - |
| Modified OSA starch | - | 10-15 | 10-15 | 10-20 |
| Other additives (including salt, flavourings, vitamins, minerals, emulsifier, flour) | 1-10 | 1-10 | 1-10 | 1-10 |
| Collagen Peptides or Wheat Gluten Hydrosylate | - | 1-10 | 1-10 | 1-10 |

The Chewhide Mark II trial was formulated using the following throughput [kg/h] settings:

| SCF Flow Rate [kg/h] | Gas Type | Glycerol | Water | Powder Blend |
|---|---|---|---|---|
| 0.0151 | $N_2$ | 22.10 | 18.00 | 98.10 |

'Partially hydrolysed collagen' contains approximately 50 wt.% water-insoluble component and 50 wt.% water soluble component) and is derived from bovine raw materials by mechanical and heat treatment, as described herein. It is supplied in powder form.

OSA indicates sodium octenyl succinate starch, supplied in particulate form.

HV Starch is potato starch.

'Natural porcine collagen extract' is a concentrated collagen extracted from natural food-grade porcine bones.

It comprises at least 920 g/kg of protein (according to ISO 5983:1998) and at most 40 g/kg fat. It is supplied in particulate form.

'Pork skin protein' is pork skin protein that contains 10-15% fat and supplied in particulate form. It may be obtained commercially, e.g. under the trade name Drinde 1015/SF, available from Essentia Protein Solutions.

Table 7

|  | Mark I | Mark II | Commercially-Available Product 3 ('CAP3') PCT/GB14/050964 | | | Rawhide Roll | Commercially-Available Product 4 |
|---|---|---|---|---|---|---|---|
| Hardness [kg] | 127.264 | 218.16 | 174.25 | 138.8 | 114.05 | 618.188 | 96.761 |
| Stress [kg/mm$^2$] | 0.113 | 0.314 | 0.177 | 0.164 | 0.121 | 0.580 | 0.065 |
| IRS | 0.607 | 0.306 | 0.52 | 0.516 | 0.587 | 0.418 | 0.465 |
| RRS | 0.895 | 0.702 | 0.771 | 0.758 | 0.809 | 0.568 | 0.811 |
| Cohesiveness | 0.719 | 0.565 | 0.657 | 0.643 | 0.632 | 0.354 | 0.422 |
| Resilience | 0.265 | 0.143 | 0.232 | 0.209 | 0.205 | 0.175 | 0.129 |
| Density [g/cm$^3$] | 0.718 | 0.728 | 0.644 | 0.628 | 0.601 | 0.527 | 0.660 |

IRS indicates instantaneous recoverable springiness; RRS indicates retarded recoverable springiness, cohesiveness therefore represents how well the product withstands a second deformation relative to how it behaved under the first deformation, resilience is indicative of how much work the sample does in trying to regain its original shape; IRS, RRS, cohesiveness and resilience may be measured in accordance with the methods described in WO2014155113 or US2016100553.

## Example 4

A study was conducted to compare three collagen supply options namely pork skin protein, partially hydrolysed collagen and concentrated collagen extract. A control sample was made using the formulation of a commercially-available edible animal chew (denoted CAP2 in the Figures) for comparison against an existing technology. As hydrolysed sodium octenyl succinate starch (OSA) is required to aid the processing of pork skin protein, all of the powder formulations were normalised to comprise 80 wt.% of the respective collagen source and 20 wt.% hydrolysed sodium octenyl succinate starch. Each formulation was treated under the cooker extrusion process conditions shown in Table 8. These conditions gave extruded materials that served as test pieces for comparison of the textural properties delivered by each of the collagen sources.

In the following Table, some of the following examples are not according to the invention and are present for illustration purposes only. Comparative examples are marked in the Table below as (CE).

Table 8

|  | Control (Commercially-Available Edible Animal Chew, CAP2) | 80 wt.% Pork Skin Protein & 20 wt.% OSA starch (CE) | 80 wt.% partially hydrolysed collagen & 20 wt.% OSA starch (CE) | 80 wt.% concentrated collagen & 20 wt.% OSA starch (CE) | 80 wt. % partially hydrolysed collagen & 20 wt.% Hydrolysed maize starch (CE) |
|---|---|---|---|---|---|
| Powders [kgh$^{-1}$] | 100 | 100 | 95 | 95 | 95 |
| Water [kgh$^{-1}$] | 13 | 10 | 18 | 18 | 18 |
| Glycerol [kgh$^{-1}$] | 15 | 17 | 22 | 22 | 22 |

(continued)

|  | Control (Commercially- Available Edible Animal Chew, CAP2) | 80 wt.% Pork Skin Protein & 20 wt.% OSA starch (CE) | 80 wt.% partially hydrolysed collagen & 20 wt.% OSA starch (CE) | 80 wt.% concentrated collagen & 20 wt.% OSA starch (CE) | 80 wt. % partially hydrolysed collagen & 20 wt.% Hydrolysed maize starch (CE) |
|---|---|---|---|---|---|
| Steam [kgh$^{-1}$] | 13 | 13 | 0 | 0 | 0 |
| EPP [bar] | 30 | 20 | 93 | 5 | 83 |
| B2 [°C] | 110 | 110 | 125 | 108 | 110 |
| B3 [°C] | 110 | 110 | 101 | 108 | 108 |
| B5 [°C] | 90 | 90 | 94 | 87 | 87 |
| B6 [°C] | 80 | 80 | 67 | 65 | 65 |
| B7 [°C] | 70 | 70 | 60 | 58 | 58 |
| SME [kWhkg$^{-1}$] | 65 | 65 | 86 | 35 | 85 |
| RPM | 175 | 190 | 175 | 300 | 170 |
| Vac [bar] | 0.4 | 0.4 | 0.26 | 0.28 | 0.26 |

Hydrolysed sodium octenyl succinate starch is often more expensive than many native starches. A separate comparative example formulation was extruded consisting of 80 wt.% partially hydrolysed collagen and 20 wt.% of a cheaper unmodified hydrolysed maize starch to emphasise the cost benefit that the relative versatility of partially hydrolysed collagen brings. The tensile toughness was determined for these formulations. The texture results are shown in Table 9.

In the following Table, some of the following examples are not according to the invention and are present for illustration purposes only. Comparative examples (CE) are marked in the Table below as (CE).

Table 9

| Formulation | Tensile Ductility [%] | Tensile Toughness [MPa.] | Tensile Strength [Mpa] |
|---|---|---|---|
| Control (Commercially-Available Edible Animal Chew, CAP2) | 37.95 | 102.06 | 3.41 |
| 80 wt.% Pork Skin Protein & 20 wt.% OSA starch (CE) | 517.00 | 503.00 | 2.40 |
| 80 wt.% Partially hydrolysed collagen & 20 wt.% OSA starch (CE) | 512.76 | 627.60 | 2.64 |
| 80 wt.% Concentrated porcine collagen extract & 20 wt.% OSA starch (CE) | 424.76 | 592.91 | 2.29 |
| 80% Partially hydrolysed collagen & 20% Hydrolysed maize starch (CE) | - | 692.30 | - |
| Formulation | Shear Resistance [kg] | Conical Probe Hardness [kg] | |
| Control (Commercially-Available Edible Animal Chew, CAP2) | 10.67 | 3.73 | |
| 80 wt.% Pork Skin Protein & 20 wt.% OSA starch (CE) | 20.16 | 1.87 | |

(continued)

| Formulation | Shear Resistance [kg] | Conical Probe Hardness [kg] | |
|---|---|---|---|
| 80 wt.% Partially hydrolysed collagen & 20 wt.% OSA starch (CE) | 30.89 | 1.06 | |
| 80 wt.% Concentrated porcine collagen extract & 20 wt.% OSA starch (CE) | 20.84 | 1.09 | |
| 80 wt.% Partially hydrolysed collagen & 20 wt.% Hydrolysed maize starch (CE) | - | - | |

The results shown in Table 9 show the following:

All of the collagen based formulations significantly outperform the Control (a commercially-available edible animal chew) formulation for toughness. This shows the benefits of using collagen in comparison to the materials that were used to make the commercially-available edible animal chew. Of the normalised powder formulations consisting of 80 wt.% of the respective collagen source and 20 wt.% hydrolysed sodium octenyl succinate starch, the formulation containing partially hydrolysed collagen delivers the toughest texture, followed by the formulations containing concentrated collagen extract and pork skin protein. The formulation containing 80 wt.% partially hydrolysed collagen and 20 wt.% unmodified hydrolysed maize starch (e.g. Glucidex 2) is the toughest of all the samples measured. When this information is considered alongside the compatibility with thermal expansion that partially hydrolysed collagen brings, the commercial viability of this formulation is clear.

Table 9 also shows that the most shear resistant (driving chew time) and softest (driving safety) sample in the study also came from use of partially hydrolysed collagen.

**Example 5** - **Lasting time and Palatability Tests**

Tests to determine the length of time an edible animal chew lasts were performed using a panel of dogs. The objective of lasting time trials is to measure the amount of time required for a dog to consume a sample. These tests were performed using samples designed for daily and weekly feeding regimens.

For the "daily" feeding regimen, samples were extruded in a shape that mimics the shape of a commercially-available edible animal chew (denoted 'CAP2' in the figures; samples were extruded through an approximately x shaped die). These samples were then cut to appropriate weights for daily feeding (approximately 16-40 g, depending on the sizes of the dogs in the feeding panel). This approach allowed for comparison of the results with existing data on commercially-available edible animal chew products (e.g. CAP2).

For the "weekly" feeding regimen, samples were extruded in a shape that mimicked the shape of a commercially-available edible animal chew (denoted 'CAP3' in the figures; samples were extruded through an approximately x shaped die). The low hot strength of the material means that this shape collapses, resulting in a much flatter final product. These samples were then cut to appropriate weights for weekly feeding (approximately 70-160 g, depending on the sizes of the dogs in the feeding panel). This approach allowed for comparison of the results with existing data on larger format products that are currently commercially available.

Due to the disparity in product weights between the samples fed and the comparison products, it is preferable to normalise the median measured time by dividing it by the sample/product weight in order to give a lasting time per gram (measured in seconds per gram). This measure was found to be largely consistent between the daily and weekly regimen feeding trials, and allows comparison with existing products

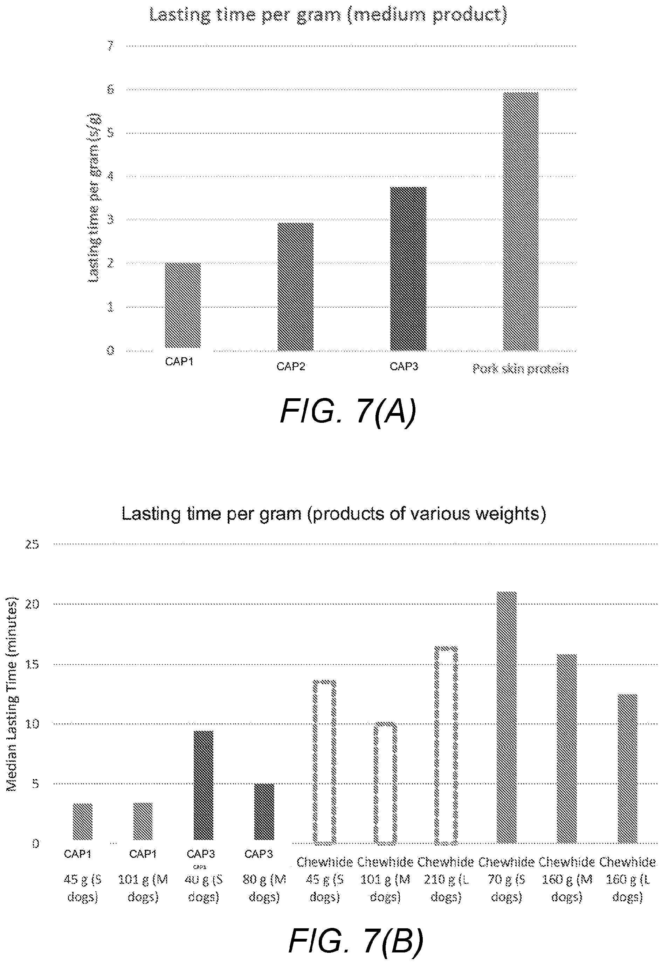

The lasting time per gram in the daily regimen of pork skin protein based samples is considerably higher than that of existing products; approximately twice to three times that of the commercially-available products that were tested (see Figure 7A; different commercially available products, i.e. animal chews, are labelled 'CAP1', 'CAP2' and 'CAP3' in Figures 7A). Figure 7B shows the median lasting times (not per gram) recorded for weekly format pork-skin-protein-based samples according to the present disclosure (referred to as "Chewhide" in the figures) versus those recorded for different sizes of other commercially-available edible animal chews. The sizes of the dogs used in each trial are included in parentheses. The solid bars on the right represent the actual recorded data, and the dotted bars represent the expected lasting time of samples cut to the weights of the control, commercially-available products (interpolated from actual lasting time data). It is clear that a weekly regimen chew made from pork skin protein has the potential to provide a step change in lasting time versus existing products.

A palatability trial was also undertaken with the objective of assessing whether dogs have a preference for eating a pork skin protein based chew versus a standard product. A commercially-available chew (denoted CAP2 in the Figures) was used as an example of a standard product, as it is starch-based chew, containing palatants designed to make it appealing to a dog. The pork-skin-protein-based samples tested did not include any additional palatants. The results showed that dogs have a clear preference for the pork-skin-protein-based chews, with these chews being chosen over a the commercially-available product on approximately 90% of occasions.

**Example 6 - partially hydrolysed collagen vs. a mixture of natural collagen and gelatine (hydrolysed collagen)**

The following example is not according to the invention and is present for illustration purposes only.

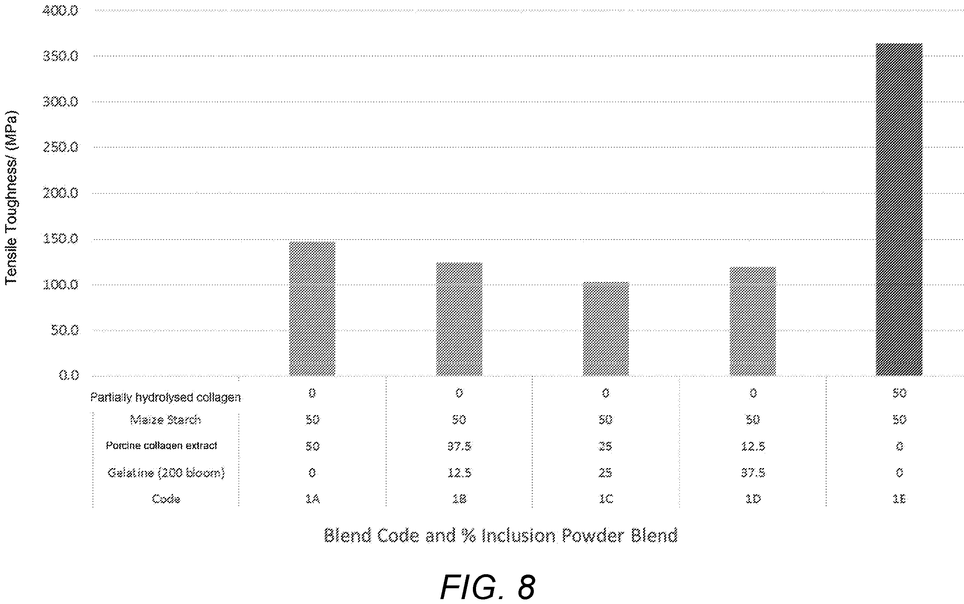

Edible animal chews were formed from a mixture of concentrated natural collagen extract and gelatine, and their tensile toughness was determined. The measured tensile toughness was compared with that of edible animal chews formed from partially hydrolysed collagen. The tensile toughness was significantly higher for edible animal chews formed from partially hydrolysed collagen than for those formed by simply blending gelatine with concentrated natural collagen extract (see Figure 8). Additionally, the alternate blends utilising a mixture of concentrated natural collagen extract and gelatine collapsed when thermally expanded.

Texture Test Procedures

The partially hydrolysed collagen may comprise a 30:70 to 70:30 (wt:wt) mixture of water-soluble component and non-water soluble component. In some examples, the partially hydrolysed collagen may comprise a 35:65 to 65:35 (wt:wt) mixture, in some examples, a 40:60 to 60:40 (wt:wt) mixture, in some examples, a 45:55 to 55:45 (wt:wt) mixture, in some examples, about a 50:50 (wt:wt) mixture of a water-soluble component and a non-water-soluble component.

This texture analysis methodology pulls products apart giving information on their ductility, tensile strength and toughness. This method is applied to flat sheet (ribbon) extrudates which can be formed into tensile bars.

The following equipment and apparatus are used (see Figure 9):

(vi) Stable Micro Systems TA-HD.plus;
(vii) Tensile rig (A/HDT) - Max. load 500 kg;
(viii) Secateurs (only required for testing a commercially-available edible animal chew);
(ix) Tensile cutter (ISO 527-2; 75mm long, 10mm wide, 5mm in centre) - Zwick Roell;
(x) 100 or 500kg load cell.

Sample preparation and testing:

(vi) Cut an extrudate into to a tensile bar by using an ISO 527-2 stamp (Zwick Roell; see Figure 9C).
(vii) Place the tensile bar into the lower grips of a tensile rig (Figure 9D; so that the full shoulder of the test piece is exposed) and tighten enough that the product does not slip during testing, but not so tight that the product breaks.
(viii) Position the upper grips of the tensile rig to align with the test piece (again, so that the full shoulder of the test piece is exposed). Tighten as described above.
(ix) Minimise any tension or slack in the test piece.
(x) The grips are moved apart by the texture analyser (TA) at 1 mm/s and the resistive force is recorded by the sensor through the breaking point of the test piece.

Data analysis:
Figure 9F shows a general plot of the force response curve from a texture analysis test plotted on axes of stress (MPa) versus strain (%). The dimensions of the central break point (width and depth) are accounted for in the plot. From a plot of this type, the following parameters can be determined:

Tensile Strength (MPa) is the peak resistive force from test piece;
Ductility (%) is the elongation to break, that is, the ability to deform without failure;
Toughness (MPa) is the area under the curve and provides a compound measure taking into account both the tensile strength and the ductility.

It is believed that the toughness of an edible animal chew is strongly correlated with the lasting time per gram in feeding tests.

Hardness Tests by the conical probe method

This texture analysis method uses a 30° cone geometry and applies the "Stress Relaxation" procedure whereby the probe indents the material/product by 3 mm and the force/stress acting on the probe during a 30 second hold period is measured. This characterises the hardness of the material (but can be used to characterise other attributes not considered in this study).

The following equipment and apparatus are used

(i) Stable Micro Systems TA-HD.plus
(ii) Lower tensile rig
(iii) 30° Stainless steel cone (P/30CSS) - Max Load 50 kg
(iv) Probe adapter (AD/100) - Max load 50 kg
(v) 100 kg load cell

Sample preparation, testing and data analysis:

(i) Ribbon shaped extrudates were cut to a length of 40 mm then clamped with 10 mm of the extrudate protruding upwards (this length is long enough that the texture data is not influenced by the clamp, but short enough that bending is not significant).
(ii) The probe enters the product at a speed of 1 mm per second to a distance of 3 mm then holds its position for 30 seconds before being withdrawn at 1 mm per second. The force response from the material is measured giving rise to a plot of the form depicted below. The material hardness (kg) can be determined by the peak force as shown.

A 6 mm probe was found to be an adequate measure to approximate hardness in the analysis of samples made from pork (or beef) skin protein. The 6 mm probe measure was found to be a poor approximation of the material hardness in partially hydrolysed collagen samples as it is a compound measure of shear resistance and hardness. The high shear resistance of the partially hydrolysed collagen samples skewed the results so the 6 mm probe method was discarded and the conical probe method used exclusively for these samples.

Shear Resistance - Warner Brazier Rig

This texture analysis method uses a "∧" shaped blade (Warner Brazier Blade) and a slit die base plate to determine the shear resistance.

The following equipment and apparatus are used for analysis on 10 mm wide by 5 mm tall strip or ribbon shaped sample of unlimited length:

(i) Stable Micro Systems TA-HD.plus ;
(ii) Heavy Duty Platform (HDP/90) - Max Load 300 kg;
(iii) Warner Brazier Blade - Max Load 25 kg;
(iv) Probe adapter (AD/100) - Max load 50 kg (bespoke probes can be made that negate the use of the Probe Adaptor and allow the test to be rated to 250 kg);
(v) Base plate with 3 mm slit;
(vi) 100kg load cell.

Sample preparation, testing and data analysis:
The ribbon shaped sample was placed in the apparatus and the Warner Brazier Blade is used to cut through the sample. The peak force [kg] required to shear the sample provides a measure of the shear resistance.

Feeding trial descriptions

*Lasting time*

The dog is given a chew, and a stopwatch is started. The timing continues until the dog has finished eating the chew, with any pauses of more than 5 seconds recorded. The pauses are then summed and subtracted from the time on the stopwatch to give an "eating time". Each dog on the panel (approximately 10 dogs) is fed three times, with the spacing determined by the feeding guide of the product (daily or weekly).

*Palatability*

Each dog on the panel (approximately 30 dogs) is fed a sample of each product to be compared. The products are then cut into small pieces and placed within mesh topped boxes, allowing the product to be smelt but not seen. The dog is then allowed to smell each box before choosing which it prefers; the dog is then allowed to eat the chosen sample. This is repeated eight times over two days, with the order of the boxes rotated to ensure a fair test.

**Example 7** - **further formulation**

As a further formulation for the edible animal chew, the following ingredients were combined as shown in Table 10 below.

Table 10

| Ingredient | Parts (by weight) |
|---|---|
| Maize starch | 45-55 |
| Partially hydrolysed collagen | 25-35 |
| OSA modified starch | 5-15 |
| Pork skin protein | 5-15 |
| Other additives (including salt, flavourings, vitamins, minerals, emulsifier, flour) | 1-10 |

This formulation was found to be particularly effective as an edible animal chew.

**Claims**

1.   An edible animal chew comprising:

a partially hydrolysed collagen; and
an alkyl succinate modified starch,
wherein the edible animal chew has a tensile toughness greater than 200 MPa, wherein the edible animal chew comprises 8 wt.% to 60 wt.% partially hydrolysed collagen.

2.   The edible animal chew according to claim 1, wherein the alkyl succinate is a C4 to C12 alkyl succinate, optionally wherein the succinate is a metal succinate, and further optionally wherein the alkyl succinate modified starch is selected from sodium octenyl succinate starch, calcium octenyl succinate starch, potassium octenyl succinate starch, aluminium octenyl succinate starch and any combination thereof, preferably wherein the wherein the alkyl succinate is sodium octenyl succinate starch.

3.   The edible animal chew according to any one of the preceding claims, wherein the partially hydrolysed collagen

a) has a Bloom gel strength of at least 300, as measured in accordance with ISO 9665, and/or
b) has a molecular weight of at least 60kDa, optionally at least 70 kDa, as measured using gel permeation chromatography (GPC), and/or
c) comprises a 30:70 to 70:30 mixture of a water soluble component and a non-water soluble component.

4.   The edible animal chew according to any one of the preceding claims, wherein the partially hydrolysed collagen, before incorporation into the edible animal chew, is formable by a process comprising forming a wet collagen product in the form of a fibrous mass from a hide or skin at a temperature of 50 °C or less, followed by drying the wet collagen product using a contact dryer, having a surface temperature of 150°C or higher, to obtain the partially hydrolysed collagen in the form of a powder.

5.   The edible animal chew according to any one of the preceding claims, further comprising a high purity natural collagen, in that the high purity natural collagen comprises less than 8 wt% fat.

6. The edible animal chew according to any one of the preceding claims, wherein the edible animal chew comprises 15 wt.% to 45 wt.% partially hydrolysed collagen, and optionally wherein the edible animal chew comprises 20 wt.% to 40 wt.% partially hydrolysed collagen.

7. The edible animal chew according to any one of the preceding claims, wherein the edible animal chew comprises 1 to 25 wt.% alkyl succinate modified starch, and optionally wherein the edible animal chew comprises from 1 wt.% to 20 wt% alkyl succinate modified starch.

8. The edible animal chew according to any one of the preceding claims, wherein the edible animal chew further comprises unmodified starch, preferably wherein the unmodified starch comprises maize starch, and optionally wherein

   (i) the edible animal chew comprises 50 wt.% or less unmodified starch and/or
   (ii) the edible animal chew comprises 10 wt.% or more unmodified starch, preferably wherein the edible animal chew comprises 15 wt.% or more unmodified starch.

9. The edible animal chew according to any preceding claim, wherein the edible animal chew comprises a plasticiser, optionally wherein the plasticiser is selected from glycerol and water, and further optionally wherein the edible animal chew comprises 15 wt.% to 45 wt.% plasticiser.

10. The edible animal chew according to any preceding claim wherein the edible animal chew further comprises diacetyl tartaric acid esters of mono- and diglycerides (DATEM).

11. The edible animal chew according to any preceding claim, wherein the edible animal chew

   (i) has been formed by extrusion and/or
   (ii) has an internal cellular structure, preferably wherein the edible animal chew is a thermally expanded edible animal chew, and/or
   (iii) is aerated.

12. A method of making an edible animal chew according to claim 1, the method comprising:

   a. providing an edible chew composition comprising:

      partially hydrolysed collagen; and
      alkyl succinate modified starch

   b. heating the edible chew composition to form a flowable edible chew composition;
   c. extruding the flowable edible chew composition to form an extrudate;
   d. allowing the extrudate to cool and harden to form the edible animal chew.

13. The method according to claim 12, wherein the flowable edible chew composition leaves the extruder at a temperature above the melting point of the partially hydrolysed collagen, optionally wherein the temperature is 100°C or more, such that steam causes expansion of the flowable edible animal chew mixture and the formation of an internal cellular structure in the resultant edible animal chew, and preferably wherein the temperature is 150°C or less.

14. The method according to any one of claims 12 to 13, wherein the edible chew composition is formed in a barrel extruder, optionally wherein

   (i) the temperature of the barrel in the barrel extruder increases in the extrusion direction, and/or
   (ii) the extruder is a single screw extruder or a twin screw extruder, preferably wherein the screw rotates at 80 rpm to 300 rpm and/or
   (iii) the specific mechanical energy (SME) applied by the extruder is 60 kWhkg$^{-1}$ to 120 kWhkg$^{-1}$.

15. The method according to any one of claims 12 to 14, wherein the extrusion is supercritical fluid extrusion, optionally wherein the supercritical fluid is nitrogen or carbon dioxide.

**Patentansprüche**

1. Verzehrbares Kauprodukt für Tiere, umfassend:

   ein teilweise hydrolysiertes Collagen; und
   eine alkylsuccinatmodifizierte Stärke,
   wobei das verzehrbare Kauprodukt für Tiere eine Zugfestigkeit von höher als 200 MPa aufweist, wobei das verzehrbare Kauprodukt für Tiere 8 Gew.-% bis 60 Gew.-% an teilweise hydrolysiertem Collagen umfasst.

2. Verzehrbares Kauprodukt für Tiere gemäß Anspruch 1, wobei das Alkylsuccinat ein C4- bis C12-Alkylsuccinat ist, wobei das Succinat gegebenenfalls ein Metallsuccinat ist und wobei ferner die alkylsuccinatmodifizierte Stärke gegebenenfalls ausgewählt ist aus Natriumoctenylsuccinatstärke, Calciumoctenylsuccinatstärke, Kaliumoctenylsuccinatstärke, Aluminiumoctenylsuccinatstärke und beliebigen Kombinationen davon, wobei das Alkylsuccinat vorzugsweise Natriumoctenylsuccinatstärke ist.

3. Verzehrbares Kauprodukt für Tiere gemäß einem der vorstehenden Ansprüche, wobei das teilweise hydrolysierte Collagen

   a) eine Bloom-Gelfestigkeit von wenigstens 300, wie gemessen gemäß ISO 9665, aufweist und/oder
   b) ein Molekulargewicht von wenigstens 60 kDa, gegebenenfalls wenigstens 70 kDa, wie gemessen unter Verwendung von Gelpermeationschromatographie (GPC), aufweist und/oder
   c) ein 30:70- bis 70:30-Gemisch einer wasserlöslichen Komponente und einer nicht wasserlöslichen Komponente umfasst.

4. Verzehrbares Kauprodukt für Tiere gemäß einem der vorstehenden Ansprüche, wobei das teilweise hydrolysierte Collagen vor Einverleiben in das verzehrbare Kauprodukt für Tiere durch ein Verfahren herstellbar ist, das Herstellen eines feuchten Collagenprodukts in der Form einer faserhaltigen Masse aus einem Balg oder einer Haut bei einer Temperatur von 50 °C oder weniger, gefolgt von Trocknen des feuchten Collagenprodukts unter Verwendung eines Kontakttrockners mit einer Oberflächentemperatur von 150 °C oder höher, umfasst, um das teilweise hydrolysierte Collagen in der Form eines Pulvers zu erhalten.

5. Verzehrbares Kauprodukt für Tiere gemäß einem der vorstehenden Ansprüche, ferner umfassend ein hochreines natürliches Collagen, wobei das hochreine natürliche Collagen weniger als 8 Gew.-% Fett umfasst.

6. Verzehrbares Kauprodukt für Tiere gemäß einem der vorstehenden Ansprüche, wobei das verzehrbare Kauprodukt für Tiere 15 Gew.-% bis 45 Gew.-% an teilweise hydrolysiertem Collagen umfasst und wobei das verzehrbare Kauprodukt für Tiere gegebenenfalls 20 Gew.-% bis 40 Gew.-% an teilweise hydrolysiertem Collagen umfasst.

7. Verzehrbares Kauprodukt für Tiere gemäß einem der vorstehenden Ansprüche, wobei das verzehrbare Kauprodukt für Tiere 1 bis 25 Gew.-% alkylsuccinatmodifizierte Stärke umfasst und wobei das verzehrbare Kauprodukt für Tiere gegebenenfalls von 1 Gew.-% bis 20 Gew.-% alkylsuccinatmodifizierte Stärke umfasst.

8. Verzehrbares Kauprodukt für Tiere gemäß einem der vorstehenden Ansprüche, wobei das verzehrbare Kauprodukt für Tiere ferner unmodifizierte Stärke umfasst, wobei die unmodifizierte Stärke vorzugsweise Maisstärke umfasst und wobei gegebenenfalls

   (i) das verzehrbare Kauprodukt für Tiere 50 Gew.-% oder weniger an unmodifizierter Stärke umfasst und/oder
   (ii) das verzehrbare Kauprodukt für Tiere 10 Gew.-% oder mehr an unmodifizierter Stärke umfasst, wobei das verzehrbare Kauprodukt für Tiere vorzugsweise 15 Gew.-% oder mehr an unmodifizierter Stärke umfasst.

9. Verzehrbares Kauprodukt für Tiere gemäß einem der vorstehenden Ansprüche, wobei das verzehrbare Kauprodukt für Tiere einen Weichmacher umfasst, wobei der Weichmacher gegebenenfalls ausgewählt ist aus Glycerol und Wasser und wobei ferner das verzehrbare Kauprodukt für Tiere gegebenenfalls 15 Gew.-% bis 45 Gew.-% Weichmacher umfasst.

10. Verzehrbares Kauprodukt für Tiere gemäß einem der vorstehenden Ansprüche, wobei das verzehrbare Kauprodukt für Tiere ferner Diacetylweinsäureester von Mono- und Diglyceriden (DATEM) umfasst.

**11.** Verzehrbares Kauprodukt für Tiere gemäß einem der vorstehenden Ansprüche, wobei das verzehrbare Kauprodukt für Tiere

  (i) durch Extrusion gebildet worden ist und/oder
  (ii) eine interne zelluläre Struktur aufweist, wobei das verzehrbare Kauprodukt für Tiere vorzugsweise ein thermisch expandiertes verzehrbares Kauprodukt für Tiere ist, und/oder
  (iii) durchlüftet ist.

**12.** Verfahren zur Herstellung eines verzehrbaren Kauprodukts für Tiere gemäß Anspruch 1, wobei das Verfahren umfasst:

  a. Bereitstellen einer verzehrbaren Kauproduktzusammensetzung umfassend:

   teilweise hydrolysiertes Collagen; und
   alkylsuccinatmodifizierte Stärke;

  b. Erhitzen der verzehrbaren Kauproduktzusammensetzung, um eine fließfähige verzehrbare Kauproduktzusammensetzung zu bilden;
  c. Extrudieren der fließfähigen verzehrbaren Kauproduktzusammensetzung, um ein Extrudat zu bilden;
  d. Erlauben, dass das Extrudat abkühlt und hart wird, um das verzehrbare Kauprodukt für Tiere zu bilden.

**13.** Verfahren gemäß Anspruch 12, wobei die fließfähige verzehrbare Kauproduktzusammensetzung den Extruder bei einer Temperatur über dem Schmelzpunkt des teilweise hydrolysierten Collagens verlässt, wobei die Temperatur gegebenenfalls 100 °C oder mehr beträgt, so dass Dampf Expansion des fließfähigen verzehrbaren Kauproduktgenmischs für Tiere und das Bilden einer internen zellulären Struktur in dem erhaltenen verzehrbaren Kauprodukt für Tiere bewirkt, und wobei die Temperatur vorzugsweise 150 °C oder weniger beträgt.

**14.** Verfahren gemäß einem der Ansprüche 12 bis 13, wobei die verzehrbare Kauproduktzusammensetzung in einem Zylinderextruder gebildet wird, gegebenenfalls wobei

  (i) die Temperatur des Zylinders in dem Zylinderextruder in der Extrusionsrichtung zunimmt und/oder
  (ii) der Extruder ein Einschneckenextruder oder ein Doppelschneckenextruder ist, wobei sich die Schnecke vorzugsweise mit 80 Upm bis 300 Upm dreht, und/oder
  (iii) die von dem Extruder aufgebrachte spezifische mechanische Energie (SME) 60 kWhkg$^{-1}$ bis 120 kWhkg$^{-1}$ beträgt.

**15.** Verfahren gemäß einem der Ansprüche 12 bis 14, wobei die Extrusion überkritische Fluidextrusion ist, wobei das überkritische Fluid gegebenenfalls Stickstoff oder Kohlendioxid ist.

**Revendications**

**1.** Produit à mâcher comestible pour animaux comprenant :

  un collagène partiellement hydrolysé ; et
  un amidon modifié par un succinate d'alkyle,
  le produit à mâcher comestible pour animaux ayant une ténacité en traction supérieure à 200 MPa, le produit à mâcher comestible pour animaux comprenant 8 % en poids à 60 % en poids de collagène partiellement hydrolysé.

**2.** Produit à mâcher comestible pour animaux selon la revendication 1, le succinate d'alkyle étant un succinate d'alkyle en C4 à C12, éventuellement le succinate étant un succinate métallique, et en outre éventuellement l'amidon modifié par un succinate d'alkyle étant choisi parmi un amidon succinate d'octényle de sodium, un amidon succinate d'octényle de calcium, un amidon succinate d'octényle de potassium, un amidon succinate d'octényle d'aluminium et une quelconque combinaison correspondante, préférablement le succinate d'alkyle étant un amidon succinate d'octényle de sodium.

**3.** Produit à mâcher comestible pour animaux selon l'une quelconque des revendications précédentes, le collagène partiellement hydrolysé

a) ayant une force de gel Bloom d'au moins 300, telle que mesurée conformément à la norme ISO 9665, et/ou
b) ayant un poids moléculaire d'au moins 60 kDa, éventuellement d'au moins 70 kDa, tel que mesuré en utilisant une chromatographie à perméation de gel (GPC), et/ou
c) comprenant un mélange 30 : 70 à 70 : 30 d'un composant soluble dans l'eau et d'un composant non soluble dans l'eau.

4. Produit à mâcher comestible pour animaux selon l'une quelconque des revendications précédentes, le collagène partiellement hydrolysé, avant incorporation dans le produit à mâcher comestible pour animaux, pouvant être mis en forme par un processus comprenant la formation d'un produit de collagène humide sous la forme d'une masse fibreuse à partir d'un cuir ou d'une peau à une température de 50 °C ou moins, suivie par un séchage du produit de collagène humide en utilisant un sécheur à contact, ayant une température de surface de 150 °C ou plus, pour obtenir le collagène partiellement hydrolysé sous la forme d'une poudre.

5. Produit à mâcher comestible pour animaux selon l'une quelconque des revendications précédentes, comprenant en outre un collagène naturel de haute pureté, dans le sens où le collagène naturel de haute pureté comprend moins de 8 % en poids de graisse.

6. Produit à mâcher comestible pour animaux selon l'une quelconque des revendications précédentes, le produit à mâcher comestible pour animaux comprenant 15 % en poids à 45 % en poids de collagène partiellement hydrolysé, et éventuellement le produit à mâcher comestible pour animaux comprenant 20 % en poids à 40 % en poids de collagène partiellement hydrolysé.

7. Produit à mâcher comestible pour animaux selon l'une quelconque des revendications précédentes, le produit à mâcher comestible pour animaux comprenant 1 à 25 % en poids d'amidon modifié par un succinate d'alkyle, et éventuellement le produit à mâcher comestible pour animaux comprenant de 1 % en poids à 20 % en poids d'amidon modifié par un succinate d'alkyle.

8. Produit à mâcher comestible pour animaux selon l'une quelconque des revendications précédentes, le produit à mâcher comestible pour animaux comprenant en outre un amidon non modifié, préférablement l'amidon non modifié comprenant l'amidon de maïs, et éventuellement,

(i) le produit à mâcher comestible pour animaux comprenant 50 % en poids ou moins d'amidon non modifié et/ou
(ii) le produit à mâcher comestible pour animaux comprenant 10 % en poids ou plus d'amidon non modifié, préférablement le produit à mâcher comestible pour animaux comprenant 15 % en poids ou plus d'amidon non modifié.

9. Produit à mâcher comestible pour animaux selon une quelconque revendication précédente, le produit à mâcher comestible pour animaux comprenant un plastifiant, éventuellement le plastifiant étant choisi parmi le glycérol et l'eau, et en outre éventuellement le produit à mâcher comestible pour animaux comprenant 15 % en poids à 45 % en poids de plastifiant.

10. Produit à mâcher comestible pour animaux selon une quelconque revendication précédente, le produit à mâcher comestible pour animaux comprenant en outre des esters d'acide diacétyltartrique de monoglycérides et diglycérides (DATEM).

11. Produit à mâcher comestible pour animaux selon une quelconque revendication précédente, le produit à mâcher comestible pour animaux

(i) ayant été formé par extrusion et/ou
(ii) ayant une structure cellulaire interne, préférablement le produit à mâcher comestible pour animaux étant un produit à mâcher comestible pour animaux thermiquement expansé, et/ou
(iii) étant aéré.

12. Procédé de fabrication d'un produit à mâcher comestible pour animaux selon la revendication 1, le procédé comprenant :

a. la fourniture d'une composition à mâcher comestible comprenant :

un collagène partiellement hydrolysé ; et
un amidon modifié par un succinate d'alkyle

b. le chauffage de la composition à mâcher comestible pour former une composition à mâcher comestible pouvant s'écouler ;
c. l'extrusion de la composition à mâcher comestible pouvant s'écouler pour former un extrudat ;
d. le fait de laisser l'extrudat refroidir et durcir pour former le produit à mâcher comestible pour animaux.

13. Procédé selon la revendication 12, la composition à mâcher comestible pouvant s'écouler sortant de l'extrudeuse à une température au-dessus du point de fusion du collagène partiellement hydrolysé, éventuellement la température étant de 100 °C ou plus, de sorte que de la vapeur cause l'expansion du mélange de produit à mâcher comestible pour animaux pouvant s'écouler et la formation d'une structure cellulaire interne dans le produit à mâcher comestible pour animaux résultant, et préférablement la température étant de 150 °C ou moins.

14. Procédé selon l'une quelconque des revendications 12 et 13, la composition à mâcher comestible étant formée dans une extrudeuse à cylindre, éventuellement

(i) la température du cylindre dans l'extrudeuse à cylindre augmentant dans la direction d'extrusion, et/ou
(ii) l'extrudeuse étant une extrudeuse à simple vis ou une extrudeuse à double vis, préférablement la vis tournant à une vitesse de 80 tpm à 300 tpm et/ou
(iii) l'énergie mécanique spécifique (SME) appliquée par l'extrudeuse étant de 60 kWhkg$^{-1}$ à 120 kWhkg$^{-1}$.

15. Procédé selon l'une quelconque des revendications 12 à 14, l'extrusion étant une extrusion à fluide supercritique, éventuellement le fluide supercritique étant l'azote ou le dioxyde de carbone.

## Tensile toughness for different pork skin protein formulations

FIG. 1(A)

## Tensile toughness for different pork skin protein formulations

FIG. 1(B)

FIG. 2(A)

FIG. 2(B)

FIG. 3(A)

FIG. 3(B)

*FIG. 4(A)*

*FIG. 4(B)*

FIG. 5(A)

FIG. 5(B)

FIG. 6(A)

FIG. 6(B)

**Lasting time per gram (medium product)**

FIG. 7(A)

**Lasting time per gram (products of various weights)**

FIG. 7(B)

FIG. 8

FIG. 9(A)

FIG. 9(B)

FIG. 9(C)

FIG. 9(D)

FIG. 9(E)

*FIG. 9(F)*

EP 3 836 797 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2006236080 B2
- EP 1875811 A1
- US 6455083 B1
- US 201733981 A1
- WO 2011149356 A
- GB 14050964 W
- WO 2014155113 A
- US 2016100553 A